(19) Europäisches Patentamt
European Patent Office
Office européen des brevets

(11) **EP 4 101 639 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
**B32B 27/00** *(2006.01)*      **B32B 27/32** *(2006.01)*
**B65D 65/40** *(2006.01)*

(21) Application number: **21763816.2**

(52) Cooperative Patent Classification (CPC):
**B32B 27/00; B32B 27/32; B65D 65/40;**
Y02W 30/80

(22) Date of filing: **04.02.2021**

(86) International application number:
**PCT/JP2021/004153**

(87) International publication number:
**WO 2021/176948 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.03.2020 JP 2020035957**

(71) Applicant: **TOPPAN INC.**
**Tokyo 110-0016 (JP)**

(72) Inventors:
• **KITAHARA Tsukasa**
**Tokyo 110-0016 (JP)**
• **TANAKA Ryota**
**Tokyo 110-0016 (JP)**
• **TAKEI Ryo**
**Tokyo 110-0016 (JP)**
• **EJIMA Yuki**
**Tokyo 110-0016 (JP)**

(74) Representative: **TBK**
**Bavariaring 4-6**
**80336 München (DE)**

(54) **GAS BARRIER LAMINATE AND PACKAGING BAG**

(57)    A gas barrier laminate according to an aspect of the present disclosure has a structure having a base material layer including a polyolefin, an undercoat layer, an inorganic oxide layer, a gas barrier adhesive layer, and a resin layer including a polyolefin laminated therein in this order.

*Fig.1*

## Description

### Technical Field

The present disclosure relates to a gas barrier laminate and a packaging bag.

### Background Art

Laminates including a biaxial stretching polyethylene terephthalate (PET) film as a base film having an excellent heat resistance and an excellent toughness and a polyolefin film made of polyethylene, polypropylene, or the like as a sealant layer are known (for example, refer to Patent Literature 1).

### Citation List

### Patent Literature

[Patent Literature 1] Japanese Unexamined Patent Publication No. 2017-178357

### Summary of Invention

### Technical Problem

Incidentally, in recent years, due to growing environmental awareness caused by marine plastic waste problems and the like, there is a demand for higher efficiency in separate collection and recycling of plastic materials. That is, even in laminates for packaging in the related art which have been devised to have a high performance by combining various dissimilar materials, there is a demand for mono-materialization.
In order to realize mono-materialization in laminates, there is a need to have constituent films made of the same material. For example, since polyethylene films, which are a kind of polyolefin films, are widely used as packaging materials, it is expected to achieve mono-materialization in polyethylene films. However, regarding basic physical properties of polyethylene films, the films are characterized by having a low melting point, being likely to be stretched even at a low temperature, and being likely to be deformed. Therefore, when an inorganic oxide layer is formed by a method such as vapor deposition with respect to a polyethylene film and high gas barrier properties are imparted thereto, there are problems that the inorganic oxide layer on the polyethylene film is likely to break during processing or after processing so that high gas barrier properties cannot be retained. In addition, the inorganic oxide layer provided on the polyethylene film is likely to break particularly at the time of bending. Therefore, there is a demand for development of a laminate which can retain high gas barrier properties even after bending.
The present disclosure has been made in consideration of the foregoing circumstances, and an object thereof is to provide a gas barrier laminate which can maintain high gas barrier properties even after bending while having a polyolefin-based film as a main constituent. In addition, another object of the present disclosure is to provide a packaging bag using the foregoing gas barrier laminate.

### Solution to Problem

In order to achieve the foregoing objects, the present disclosure provides a gas barrier laminate which has a structure having a base material layer including a polyolefin, an undercoat layer, an inorganic oxide layer, a gas barrier adhesive layer, and a resin layer including a polyolefin laminated therein in this order.
When an inorganic oxide layer is formed on a base material layer including a polyolefin to impart gas barrier properties thereto, the inorganic oxide layer which is thin, hard, and fragile is likely to break on the base material layer which is soft and likely to be stretched, and there is a tendency that the gas barrier properties cannot be sufficiently manifested. In contrast, according to the gas barrier laminate of the present disclosure, since an undercoat layer for providing an inorganic oxide layer is included on the base material layer, an inorganic oxide layer can be uniformly formed on the undercoat layer, and occurrence of breaking in the inorganic oxide layer caused by stretching of the base material layer can be curbed. In addition, according to the gas barrier laminate of the present disclosure, since a gas barrier adhesive layer is included on the inorganic oxide layer, it is possible to obtain a gas barrier laminate in which the gas barrier adhesive layer protects the inorganic oxide layer and which can also endure a bending test as a packaging material. When the layer provided on the inorganic oxide layer is an adhesive layer having no gas barrier properties or a barrier layer having no function of an adhesive, it is difficult to maintain high gas barrier properties after a bending test. Since an adhesive layer having gas barrier properties is provided on the inorganic oxide layer, breaking in the inorganic oxide layer at the time of bending can be curbed, and for instance, even when a minor break occurs in a part of the inorganic oxide layer, the minor break can be filled with the gas barrier adhesive layer so that degradation in gas barrier properties can be curbed. In addition, in the gas barrier laminate of the present disclosure, since both the base material layer and the resin layer are layers including a polyolefin, mono-materialization can be realized.

In the gas barrier laminate, a thickness of the gas barrier adhesive layer may be equal to or larger than 50 times a thickness of the inorganic oxide layer. Since the gas barrier adhesive layer plays not only a role as an adhesive But also a role as a protective coat layer, it can be used with a thickness that is equal to or larger than 50 times with respect to the inorganic oxide layer. Since the gas barrier adhesive layer has the foregoing thickness, breaking in the inorganic oxide layer can be more sufficiently curbed, and the gas barrier properties of the gas barrier laminate can be further improved. In addition, since the gas barrier adhesive layer has the foregoing thickness, cushioning properties of alleviating an impact from the outside can be achieved, and thus the inorganic oxide layer can be prevented from breaking due to an impact.

In the gas barrier laminate, an oxygen transmission rate of the gas barrier adhesive layer may be 100 $cc/m^2 \cdot day \cdot atm$ or lower. Accordingly, the gas barrier properties of the gas barrier laminate can be further improved, and degradation in gas barrier properties after bending can be curbed even further. In addition, when a minor break occurs in the inorganic oxide layer due to bending or the like and when the gas barrier adhesive layer enters and fills a gap thereof, since the oxygen transmission rate of the gas barrier adhesive layer is within the foregoing range, degradation in gas barrier properties can be curbed even further.

In the gas barrier laminate, a logarithmic decrement on a surface of the gas barrier adhesive layer measured at 30°C using a rigid body pendulum-type physical property tester may be 0.1 or smaller. Since the logarithmic decrement on a surface of the gas barrier adhesive layer is 0.1 or smaller, the gas barrier properties of the gas barrier laminate can be further improved, and degradation in gas barrier properties after bending can be curbed even further. It is conceivable that when the logarithmic decrement is low, since molecules on the surface of the gas barrier adhesive layer are unlikely to move and gaseous molecules such as oxygen are unlikely to pass therethrough, higher gas barrier properties can be achieved.

In the gas barrier laminate, the gas barrier adhesive layer may be a layer formed using an epoxy-based adhesive. Since it is easy to make a dense film using an epoxy resin due to the molecular structure thereof, a gas barrier adhesive layer formed using an epoxy-based adhesive is likely to exhibit higher gas barrier properties. Particularly, a gas barrier adhesive layer which is formed using an epoxy-based adhesive And of which the logarithmic decrement is 0.1 or smaller is likely to exhibit far superior gas barrier properties.

In the gas barrier laminate, the inorganic oxide layer may include a silicon oxide. Since an inorganic oxide layer including a silicon oxide is likely to curb deterioration in gas barrier properties due to stretching or bending, degradation in gas barrier properties of the gas barrier laminate, which uses a base material layer including a polyolefin and in which deformation is likely to occur, is likely to be curbed.

In the gas barrier laminate, the resin layer may be a sealant layer. A heat fusion temperature difference between the base material layer and the sealant layer may be 10°C or greater. Since a heat fusion temperature difference of 10°C or greater is provided between the base material layer and the sealant layer, it is easy to mold a gas barrier laminate into a packaging bag or the like through heat sealing.

In the gas barrier laminate, a Tg difference between the undercoat layer and the gas barrier adhesive layer may be 100°C or smaller. Since the Tg difference between the undercoat layer and the gas barrier adhesive layer is limited to 100°C or smaller, it is possible to curb breaking in the inorganic oxide layer due to stress applied to the inorganic oxide layer disposed between the undercoat layer and the gas barrier adhesive layer at the time of heat sealing or at the time of processing of the gas barrier laminate.

The foregoing gas barrier laminate may have a structure further having a print layer laminated therein. In addition, the gas barrier laminate may have a structure having the resin layer as a first resin layer and further having a second resin layer, different from the first resin layer, including a polyolefin laminated therein. When the gas barrier laminate includes a print layer and includes no second resin layer, the print layer is normally formed on a surface of the base material layer on a side opposite to the undercoat layer.

When the gas barrier laminate includes the second resin layer, a heat fusion temperature difference between two layers farthest away from each other in three layers including the base material layer, the first resin layer, and the second resin layer may be 10°C or greater. Accordingly, it is easy to mold a gas barrier laminate into a packaging bag or the like through heat sealing.

In addition, the present disclosure provides a packaging bag made as a bag with the gas barrier laminate described above.

**Advantageous Effects of Invention**

According to the present disclosure, even when a polyolefin-based film is adopted as a main constituent, it is possible to provide a gas barrier laminate which can maintain high gas barrier properties even after bending. In addition, the present disclosure can provide a packaging bag using the gas barrier laminate.

**Brief Description of Drawings**

FIG. 1 is a schematic cross-sectional view illustrating a gas barrier laminate according to an embodiment.
FIG. 2 is a schematic cross-sectional view illustrating the gas barrier laminate according to another embodiment.
FIG. 3 is a schematic cross-sectional view illustrating the gas barrier laminate according to another embodiment.
FIG. 4 is a schematic cross-sectional view illustrating the gas barrier laminate according to another embodiment.
FIG. 5 is a schematic cross-sectional view illustrating the gas barrier laminate according to another embodiment.
FIG. 6 is a perspective view illustrating an embodiment of a packaging bag with a mouth plug.
FIG. 7 is a front view illustrating an embodiment of a tube container.

**Description of Embodiment**

Hereinafter, a preferred embodiment of the present disclosure will be described in detail with reference to the drawings depending on circumstances. In the drawings, the same reference signs are applied to parts which are the same or corresponding, and duplicate description thereof will be omitted. In addition, the dimensional ratios of the drawings are not limited to the illustrated ratios.

<Gas barrier laminate>

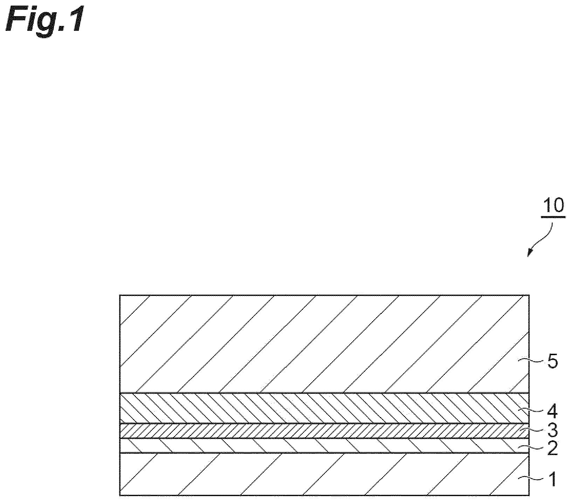

FIG. 1 is a schematic cross-sectional view illustrating a gas barrier laminate according to an embodiment. A gas barrier laminate 10 illustrated in FIG. 1 includes a base material layer 1, an undercoat layer 2, an inorganic oxide layer 3, a gas barrier adhesive layer 4, and a resin layer (first resin layer) 5 in this order. Both the base material layer 1 and the first resin layer 5 include a polyolefin.

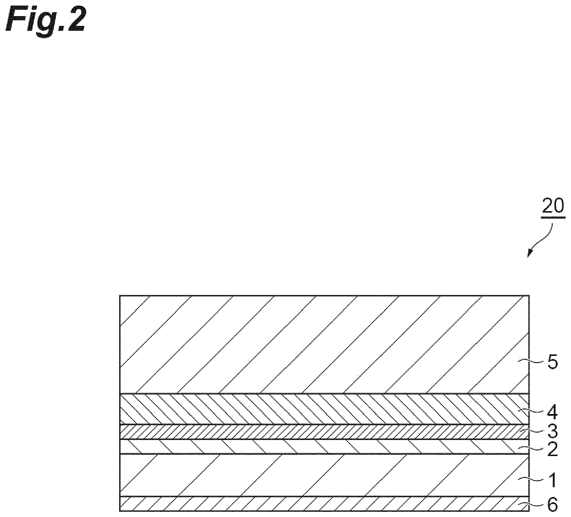

FIG. 2 is a schematic cross-sectional view illustrating the gas barrier laminate according to another embodiment. A gas barrier laminate 20 illustrated in FIG. 2 further includes a print layer 6 on an outward side of a base material layer in the gas barrier laminate 10 illustrated in FIG. 1 (on a surface on a side opposite to the undercoat layer 2).

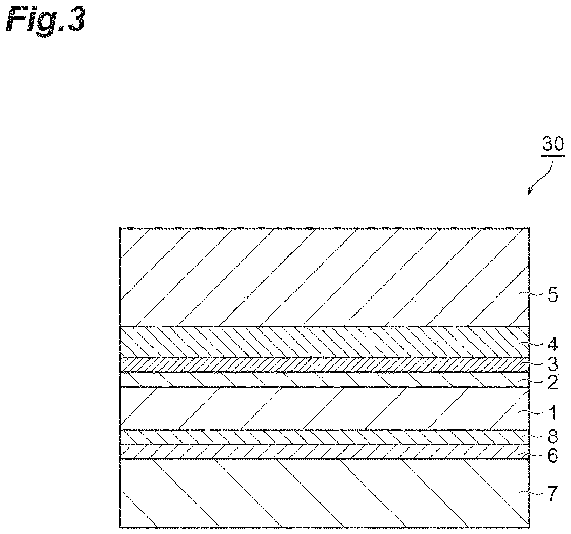

FIG. 3 is a schematic cross-sectional view illustrating the gas barrier laminate according to another embodiment. A gas barrier laminate 30 illustrated in FIG. 3 has a structure in which the print layer 6 and a second resin layer 7 are laminated on the outward side of the base material layer in the gas barrier laminate 10 illustrated in FIG. 1 with an adhesive layer 8 therebetween. The second resin layer 7 includes a polyolefin.

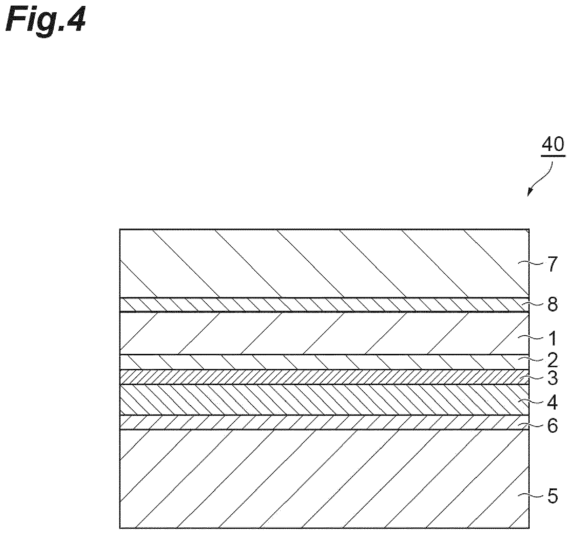

FIG. 4 is a schematic cross-sectional view illustrating the gas barrier laminate according to another embodiment. A gas barrier laminate 40 illustrated in FIG. 4 includes the first resin layer 5, the print layer 6, the gas barrier adhesive layer 4, the inorganic oxide layer 3, the undercoat layer 2, the base material layer 1, the adhesive layer 8, and the second resin layer 7 in this order.

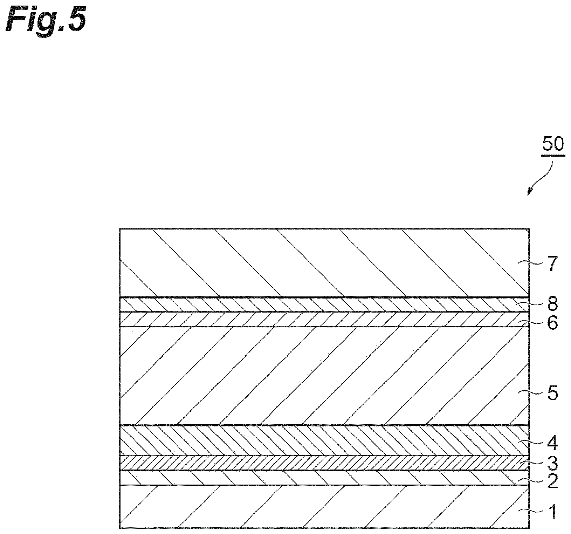

FIG. 5 is a schematic cross-sectional view illustrating the gas barrier laminate according to another embodiment. A gas barrier laminate 50 illustrated in FIG. 5 has a structure in which the print layer 6, the adhesive layer 8, and the second resin layer 7 are laminated on an outward side of the first resin layer 5 in the gas barrier laminate 10 illustrated in FIG. 1 (on a surface on a side opposite to the gas barrier adhesive layer 4).
When a packaging bag or the like is produced using the gas barrier laminate 10, 20, or 30, a function as a sealant layer can be imparted to the first resin layer 5. When a packaging bag or the like is produced using the gas barrier laminate 40 or 50, a function as a sealant layer can be imparted to the second resin layer 7. Hereinafter, each of the layers will be described.

[Base material layer 1]

The base material layer 1 is a film serving as a supporter and includes a polyolefin. A content of a polyolefin in the base material layer 1 may be 50 mass% or more, may be 80 mass% or more, or may be 100 mass% based on the total content of the base material layer 1. It is preferable to use a polyolefin as a material of the base material layer 1 from a viewpoint of recycling efficiency. In addition, as the content of a polyolefin in the base material layer 1 increases, the recycling efficiency is further improved.
The base material layer 1 may be constituted of a polyolefin film. Examples of a polyolefin include a polyethylene (PE), a polypropylene (PP), and a polybutene (PB). A polyolefin may be a polyethylene. In addition, examples of a polyolefin include an acid-modified polyolefin obtained by graft-modifying a polyolefin using an unsaturated carboxylic acid, an acid anhydride of an unsaturated carboxylic acid, an ester of an unsaturated carboxylic acid, or the like.

A polyolefin is preferably a polypropylene from a viewpoint of a retort treatment resistance. Here, a polypropylene may be a homopolypropylene or a propylene copolymer. From a viewpoint of adhesive properties and barrier properties, a coat layer such as an easily adhesive layer including a propylene copolymer may be provided on a lamination surface of the base material layer 1 (a surface on a side where the undercoat layer 2 is laminated). The easily adhesive layer can be provided between the base material layer 1 and the undercoat layer 2.

A density of a polyolefin included in the base material layer 1 may be 0.900 g/cm$^3$ or higher or may be 0.910 g/cm$^3$ or higher. In addition, when a polyolefin included in the base material layer 1 is a polyethylene, the density thereof may be 0.930 g/cm$^3$ or higher, may be 0.935 g/cm$^3$ or higher, or may be 0.945 g/cm$^3$ or higher. If the density of a polyolefin is 0.935 g/cm$^3$ or higher, generation of creases due to stretching of the base material layer 1 during roll processing is likely to be curbed, and occurrence of breaking in the inorganic oxide layer 3 is likely to be curbed. The base material layer 1 may include a polyolefin which is biomass-derived or recycled.

A constitution of the base material layer 1 may be a multilayer constitution provided with a plurality of layers (films) respectively including polyolefins having different densities. It is desirable that the base material layer 1 be suitably multilayered in consideration of processing suitability, a rigidity or a firmness, a heat resistance, powder removal at the time of transportation, and the like of a film constituting the base material layer 1. A film constituting the base material layer 1 can be produced by suitably selecting and using a high-density polyolefin, a medium-density polyolefin, a low-density polyolefin, or the like. When the density of a film as the base material layer 1 is measured, the density is preferably 0.900 g/cm$^3$ or higher. In addition, each of the layers may be laminated while varying the content of a slipping agent, an anti-static agent, or the like therein. The base material layer 1 including a plurality of layers may be laminated and made into a film through extrusion coating, coextrusion coating, sheet molding, coextrusion blow molding, or the like. The total thickness of the base material layer 1 including a plurality of layers is preferably approximately 10 to 100 μm and is more preferably 15 to 50 μm.

The film constituting the base material layer 1 may be a stretched film or may be a non-stretched film. However, from a viewpoint of an impact resistance, a heat resistance, a water resistance, dimensional stability, easily tearing properties, and the like, a film constituting the base material layer 1 may be a stretched film. When the print layer 6 is provided on the base material layer 1, there is an advantage that a stretched film is likely to be printed. In addition, if the base material layer 1 is a stretched film, a gas barrier laminate can be more favorably used for the purpose of performing boiling treatment. A stretching method is not particularly limited, and any method, such as stretching by inflation, uniaxial stretching, biaxial stretching, or the like, may be adopted as long as a film having stable dimensions can be supplied.

In the base material layer 1, a thermal shrinkage rate in a traveling direction (MD direction) and a vertical direction (TD direction) after heating at 100°C for 15 minutes is preferably 3% or lower, more preferably 2% or lower, and further preferably 1.5% or lower. If the thermal shrinkage rate of the base material layer 1 is within the foregoing range, generation of creases due to stretching of the base material layer 1 during roll processing is likely to be curbed, and occurrence of breaking in the inorganic oxide layer 3 is likely to be curbed.

Here, the foregoing thermal shrinkage rate (%) is a value calculated by the following expression.

$$\text{Thermal shrinkage rate (\%)} = \{(\text{length before heating} - \text{length after heating})/\text{length before heating}\} \times 100$$

A measurement procedure of the thermal shrinkage rate is as follows.

(1) The base material layer 1 is cut out into 20 cm×20 cm to be used as a measurement sample.
(2) A line of 10 cm is marked in the MD direction or the TD direction of the measurement sample (length before heating).
(3) The measurement sample is heated at 100°C for 15 minutes.
(4) The length of the marked line in the MD direction or the TD direction is measured (length after heating).
(5) The thermal shrinkage rate is calculated by the foregoing expression.

A thickness of the base material layer 1 is not particularly limited. The thickness can become 6 to 200 μm in accordance with the purpose. However, from a viewpoint of achieving an excellent impact resistance and excellent gas barrier properties, the thickness may be 9 to 50 μm or may be 12 to 38 μm.

In the base material layer 1, from a viewpoint of improving the adhesive properties with respect to the undercoat layer 2 or the inorganic oxide layer 3, the lamination surface thereof may be subjected to various kinds of preliminary treatment such as corona treatment, plasma treatment, low-temperature plasma treatment, frame treatment, chemical treatment, solvent treatment, and ozone treatment within a range not impairing the barrier performance thereof, or may be provided with a coat layer such as an easily adhesive layer.

The base material layer 1 may contain an additive agent such as a filler, an anti-blocking agent, an anti-static agent, a plasticizer, a lubricant, or an oxidation inhibitor. Regarding these additive agents, any one kind may be used alone, or two or more kinds may be used together.

[Undercoat layer 2]

An undercoat layer (anchor coat layer) 2 is provided on a surface where the inorganic oxide layer 3 of the base material layer 1 is laminated. The undercoat layer 2 can exhibit effects, such as improvement in adhesive performance between the base material layer 1 and the inorganic oxide layer 3, improvement in smoothness on the surface of the base material layer 1, and curbs on occurrence of breaking in the inorganic oxide layer 3 caused by stretching of the base material layer 1. Since the smoothness is improved, the inorganic oxide layer 3 can be subjected to uniform film formation with no defect, and thus high barrier properties are likely to be manifested. The undercoat layer 2 can be formed using a composition for forming an undercoat layer (anchor coat agent).

Examples of a resin used in an anchor coat agent include an acrylic resin, an epoxy resin, an acrylic urethane-based resin, a polyester-based polyurethane resin, and a polyether-based polyurethane resin. From a viewpoint of a heat resistance and an interlayer adhesive strength, it is preferable to adopt an acrylic urethane-based resin or a polyester-based polyurethane resin as a resin used in an anchor coat agent. The undercoat layer 2 can be formed using an anchor coat agent including these resins or components which form these resins through reaction.

A thickness of the undercoat layer 2 is not particularly limited. However, it is preferably within a range of 0.01 to 5 $\mu$m, more preferably within a range of 0.03 to 3 $\mu$m, and particularly preferably within a range of 0.05 to 2 $\mu$m. If the thickness of the undercoat layer 2 is equal to or larger than the foregoing lower limit value, there is a tendency that a more sufficient interlayer adhesive strength can be achieved. On the other hand, if it is equal to or smaller than the foregoing upper limit value, there is a tendency that desired gas barrier properties are likely to be manifested.

Regarding a method for coating the base material layer 1 with the undercoat layer 2 thereon, a known coating method can be used without any particular limitation, and examples thereof include an immersion method (dipping method); and a method of using a spray, a coater, a printer, a brush, or the like. In addition, examples of kinds of coaters and printers used in these methods and coating types thereof can include a gravure coater of a direct gravure type, a reverse gravure type, a kiss reverse gravure type, an offset gravure type, or the like; a reverse roll coater; a micro-gravure coater; a chamber doctor-combined coater; an air-knife coater; a dip coater; a bar coater; a comma coater; a die coater; and the like.

Regarding a coating amount of the undercoat layer 2, mass per square meter thereof after coating with an anchor coat agent and drying is preferably 0.01 to 5 g/m$^2$ and more preferably 0.03 to 3 g/m$^2$. If mass per square meter thereof after coating with an anchor coat agent and drying is equal to or smaller than the foregoing lower limit, there is a tendency that film formation becomes sufficient. On the other hand, if it is equal to or smaller than the foregoing upper limit, there is a tendency that the anchor coat agent is likely to be sufficiently dried and a solvent is unlikely to remain.

A method for drying the undercoat layer 2 is not particularly limited, and examples thereof can include a method of natural drying, a method for performing drying in an oven set to a predetermined temperature, and methods using dryers which belong to the foregoing coaters, for example, an arch dryer, a floating dryer, a drum dryer, and an infrared dryer. Moreover, drying conditions can be suitably selected depending on the drying method. For example, in the method for performing drying in an oven, it is preferable to perform drying at a temperature of 60°C to 100°C for approximately one second to two minutes.

In place of the resins described above, a polyvinyl alcohol-based resin can be used as the undercoat layer 2. A polyvinyl alcohol-based resin need only have a vinyl alcohol unit established through saponification of a vinyl ester unit, and examples thereof include a polyvinyl alcohol (PVA), an ethylene-vinyl alcohol copolymer (EVOH).

Examples of a PVA include resins in which a vinyl ester such as a vinyl acetate, a vinyl formate, a vinyl propionate, a vinyl valeric acid, a vinyl caprate, a vinyl laurate, a vinyl stearate, a vinyl pivalic acid, or a vinyl versatic acid is polymerized alone and is subsequently saponified. A PVA may be a denatured PVA subjected to copolymerization denaturation or post-denaturation. For example, a denatured PVA can be obtained by copolymerizing a vinyl ester and an unsaturated monomer which can be copolymerized with a vinyl ester and saponifying them thereafter. Examples of an unsaturated monomer which can be copolymerized with a vinyl ester include olefins such as an ethylene, a propylene, an isobutylene, an $\alpha$-octene, an $\alpha$-dodecene, and an $\alpha$-octadecene; hydroxy group-containing $\alpha$-olefins such as a 3-butene-1-ol, a 4-pentyne-1-ol, and a 4-hexene-1-ol; unsaturated acids such as an acrylic acid, a methacrylic acid, a crotonic acid, a maleic acid, a maleic anhydride, an itaconic acid, and an undecylenic acid; nitriles such as an acrylonitrile and metaacrylonitrile; amides such as a diacetone acrylamide, an acrylamide, and a methacrylamide; olefin sulfonic acids such as an ethylene sulfonic acid, an allyl sulfonic acid, and a metaallyl sulfonic acid; vinyl compounds such as an alkyl vinyl ether, a dimethylallyl vinyl ketone, an N-vinylpyrrolidone, a vinyl chloride, a vinyl ethylene carbonate, a 2,2-dialkyl-4-vinyl-1,3-dioxolane, a glycerin monoallyl ether, and a 3,4-diacetoxy-1-butene; a vinylidene chloride; a 1,4-diacetoxy-2-butene; and a vinylene carbonate.

A polymerization degree of a PVA is preferably 300 to 3,000. If the polymerization degree is 300 or higher, the barrier properties are likely to be improved. In addition, if it is 3,000 or lower, degradation in coating suitability due to an excessively high viscosity is likely to be curbed. A saponification degree of a PVA is preferably 90 mol% or higher, more preferably 95 mol% or higher, and further preferably 99 mol% or higher. In addition, the saponification degree of a PVA may be 100 mol% or lower or 99.9 mol% or lower. The polymerization degree and the saponification degree of a PVA can be measured in conformity with the method described in JIS K 6726 (1994).

An EVOH can be generally obtained by saponifying a copolymer of an ethylene and an acid vinyl ester such as a vinyl acetate, a vinyl formate, a vinyl propionate, a vinyl valeric acid, a vinyl caprate, a vinyl laurate, a vinyl stearate, a vinyl pivalic acid, or a vinyl versatic acid.

A polymerization degree of an EVOH is preferably 300 to 3,000. If the polymerization degree is 300 or higher, the barrier properties are likely to be improved. In addition, if it is 3,000 or lower, degradation in coating suitability due to an excessively high viscosity is likely to be curbed. A saponification degree of vinyl ester components of an EVOH is preferably 90 mol% or higher, more preferably 95 mol% or higher, and further preferably 99 mol% or higher. In addition, the saponification degree of an EVOH may be 100 mol% or lower or 99.9 mol% or lower. The saponification degree of an EVOH can be obtained from a peak surface area of hydrogen atoms included in a vinyl ester structure and a peak surface area of hydrogen atoms included in a vinyl alcohol structure by performing nuclear magnetic resonance ($^1$H-NMR) measurement.

An ethylene unit content of an EVOH is 10 mol% or higher, more preferably 15 mol% or higher, further preferably 20 mol% or higher, and particularly preferably 25 mol% or higher. In addition, the ethylene unit content of an EVOH is preferably 65 mol% or lower, more preferably 55 mol% or lower, and further preferably 50 mol% or lower. If the ethylene unit content is 10 mol% or higher, the gas barrier properties or the dimensional stability under high humidity can be favorably retained. On the other hand, if the ethylene unit content is 65 mol% or lower, the gas barrier properties can be enhanced. The ethylene unit content of an EVOH can be obtained by an NMR method.

When a polyvinyl alcohol-based resin is used as the undercoat layer 2, examples of a method for forming the undercoat layer 2 include coating using a polyvinyl alcohol-based resin solution and multilayer extrusion.

[Inorganic oxide layer 3]

Examples of a constituent material of the inorganic oxide layer 3 include inorganic oxides such as an aluminum oxide, a silicon oxide, a magnesium oxide, and a tin oxide. From a viewpoint of transparency and barrier properties, an inorganic oxide may be selected from the group consisting of an aluminum oxide, a silicon oxide, and a magnesium oxide. In addition, from a viewpoint of excellent tensile stretchability at the time of processing, it is preferable that the inorganic oxide layer 3 be a layer using a silicon oxide. When the inorganic oxide layer 3 is used, high barrier properties can be achieved with an extremely thin layer within a range not affecting the recycling efficiency of a gas barrier laminate.

An O/Si ratio of the inorganic oxide layer 3 is desirably 1.7 or greater. If the O/Si ratio is 1.7 or greater, a proportion of the content of a metal Si is restricted so that favorable transparency is likely to be obtained. In addition, the O/Si ratio is preferably 2.0 or smaller. If the O/Si ratio is 2.0 or smaller, an inorganic oxide layer can be prevented from becoming excessively hard due to high crystallinity of a SiO, and thus a favorable tensile resistance can be achieved. Accordingly, when the gas barrier adhesive layer 4 is laminated, occurrence of cracking in the inorganic oxide layer 3 can be curbed. In addition, the base material layer 1 may shrink due to heat at the time of boiling treatment even after being molded into a packaging bag, since the O/Si ratio is 2.0 or smaller, the inorganic oxide layer is likely to follow the shrinkage, and thus degradation in barrier properties can be curbed. From a viewpoint of more sufficiently achieving these effects, the O/Si ratio of the inorganic oxide layer 3 is preferably 1.75 or greater and 1.9 or smaller and more preferably 1.8 or greater and 1.85 or smaller.

The O/Si ratio of the inorganic oxide layer 3 can be obtained by an X-ray photoelectron spectroscopy (XPS). For example, the O/Si ratio thereof can be measured using X-RAY PHOTOELECTRON SPECTROSCOPY ANALYZER (manufactured by JEOL LTD., trade name: JPS-90MXV) as a measurement device and non-monochromatic MgK$\alpha$ (1253.6 eV) as an X-ray source with an X-ray output of 100 W (10 kV-10 mA). Relative sensitivity factors of 2.28 for O1s and 0.9 for Si2p can be respectively used for quantitative analysis for obtaining an O/Si ratio.

A film thickness of the inorganic oxide layer 3 is preferably 10 nm or larger and 50 nm or smaller. If the film thickness is 10 nm or larger, sufficient gas barrier properties can be achieved. In addition, if the film thickness is 50 nm or smaller, occurrence of cracking caused by deformation due to internal stress of a thin film can be curbed, and degradation in gas barrier properties can be curbed. If the film thickness is 50 nm or smaller, increase in cost caused by increase in amounts of materials used and a prolonged film formation time is likely to be curbed, which is preferable from a viewpoint of economic aspect. From a viewpoint similar to that described above, the film thickness of an inorganic oxide layer is more preferably 20 nm or larger and 40 nm or smaller.

For example, the inorganic oxide layer 3 can be formed through vacuum film formation. Regarding vacuum film formation, a physical vapor deposition method or a chemical vapor deposition method can be used. Examples of a physical vapor deposition method can include a vacuum vapor deposition method, a sputtering method, and an ion plating method, but it is not limited to thereto. Examples of a chemical vapor deposition method can include a thermal CVD method, a plasma CVD method, and a photo-CVD method, but it is not limited to thereto.

In the foregoing vacuum film formation, a resistance heating-type vacuum vapor deposition method, an electron beam (EB) heating-type vacuum vapor deposition method, an induction heating-type vacuum vapor deposition method, a sputtering method, a reactive sputtering method, a dual magnetron sputtering method, a plasma chemical vapor deposition method (PECVD method), or the like is particularly preferably used. However, in consideration of productivity, a vacuum vapor deposition method is the most excellent method at present. Regarding a heating means in the vacuum vapor deposition method, it is preferable to use any type of an electron beam heating type, a resistance heating type, and an induction heating type.

[Gas barrier adhesive layer 4]

The gas barrier adhesive layer 4 exhibits effects of causing the inorganic oxide layer 3 and the first resin layer 5 to adhere to each other, protecting the inorganic oxide layer 3, and preventing breaking in the inorganic oxide layer 3 at the time of bending.

In addition, the gas barrier adhesive layer 4 is a layer having gas barrier properties. Since the gas barrier adhesive layer 4 is provided, gas barrier properties of a gas barrier laminate can be improved. An oxygen transmission rate of the gas barrier adhesive layer 4 is preferably 150 cc/m$^2$·day·atm or lower, more preferably 100 cc/m$^2$·day·atm or lower, further preferably 80 cc/m$^2$·day·atm or lower, and particularly preferably 50 cc/m$^2$·day·atm or lower. Since the oxygen transmission rate is within the foregoing range, gas barrier properties of a gas barrier laminate can be sufficiently improved, and for instance, even when a minor break occurs in the inorganic oxide layer 3, the gas barrier adhesive layer 4 can enter and fill a gap thereof so that degradation in gas barrier properties can be curbed.

The gas barrier adhesive layer 4 is formed using an adhesive which can manifest gas barrier properties after curing. Examples of an adhesive used for forming the gas barrier adhesive layer 4 include an epoxy-based adhesive And a polyester/polyurethane-based adhesive. Specific examples of an adhesive which can manifest gas barrier properties after curing include "MAXIVE" manufactured by MITSUBISHI GAS CHEMICAL COMPANY, INC. and "Paslim" manufactured by DIC CORPORATION.

A logarithmic decrement on a surface of the gas barrier adhesive layer 4 measured at 30°C using a rigid body pendulum-type physical property tester is preferably 0.1 or smaller, more preferably 0.05 or smaller, and further preferably 0.03 or smaller. Since the logarithmic decrement on a surface of the gas barrier adhesive layer 4 is within the foregoing range, gas barrier properties of a gas barrier laminate can be further improved, and degradation in gas barrier properties after bending can be curbed even further.

A thickness of the gas barrier adhesive layer 4 is preferably equal to or larger than 50 times a thickness of the inorganic oxide layer 3. Since the thickness of the adhesive layer 4 is within the foregoing range, breaking in the inorganic oxide layer 3 can be more sufficiently curbed, and gas barrier properties of a gas barrier laminate can be further improved. In addition, since the thickness of the gas barrier adhesive layer 4 is within the foregoing range, cushioning properties of alleviating an impact from the outside can be achieved, and thus the inorganic oxide layer 3 can be prevented from breaking due to an impact. On the other hand, from a viewpoint of retaining flexibility of a gas barrier laminate, processing suitability, and costs, the thickness of the gas barrier adhesive layer 4 is preferably 300 times or smaller than the thickness of the inorganic oxide layer 3.

The thickness of the gas barrier adhesive layer 4 is preferably 0.1 to 20 μm, more preferably 0.5 to 10 μm, and further preferably 1 to 5 μm. Since the thickness of the gas barrier adhesive layer 4 is equal to or larger than the foregoing lower limit value, breaking in the inorganic oxide layer 3 can be more sufficiently curbed, and gas barrier properties of a gas barrier laminate can be further improved. In addition, since the thickness of the gas barrier adhesive layer 4 is equal to or larger than the foregoing lower limit value, cushioning properties of alleviating an impact from the outside can be achieved, and thus the inorganic oxide layer 3 can be prevented from breaking due to an impact. On the other hand, since the thickness of the gas barrier adhesive layer 4 is equal to or smaller than the foregoing upper limit value, there is a tendency that flexibility of a gas barrier laminate can be sufficiently retained.

For example, coating can be performed with an adhesive for forming the gas barrier adhesive layer 4 by a bar coat method, a dipping method, a roll coat method, a gravure coat method, a reverse coat method, an air-knife coat method, a comma coat method, a die coat method, a screen print method, a spray coat method, a gravure offset method, or the like. For example, a temperature when a coated film coated with this adhesive is dried can be 30°C to 200°C and is preferably 50°C to 180°C. In addition, for example, a temperature when the foregoing coated film is cured can be room temperature to 70°C and is preferably 30°C to 60°C. Since the temperature at the time of drying and curing is set within the foregoing range, occurrence of cracking in the inorganic oxide layer 3 or the gas barrier adhesive layer 4 can be curbed even further, and excellent gas barrier properties can be manifested.

From a viewpoint of preventing breaking in the inorganic oxide layer 3, the gas barrier adhesive layer 4 and the inorganic oxide layer 3 are preferably in direct contact with each other (there is no other layer interposed therebetween). Therefore, the gas barrier adhesive layer 4 is preferably formed by coating the inorganic oxide layer 3 with the foregoing adhesive thereon and drying and curing the adhesive. Similarly, from a viewpoint of preventing breaking in the inorganic oxide layer 3, the inorganic oxide layer 3 and the undercoat layer 2 are preferably in direct contact with each other (there is no other layer interposed therebetween).

[First resin layer 5]

The first resin layer 5 is a layer including a polyolefin. The content of a polyolefin in the first resin layer 5 may be 50 mass% or more, may be 80 mass% or more, or may be 100 mass% based on the total content of the first resin layer 5. The first resin layer 5 may include a polyolefin which is biomass-derived or recycled. The first resin layer 5 may be a sealant layer. A sealant layer is a layer for imparting sealing properties through heat sealing in a gas barrier laminate. A sealant layer may be constituted of a polyolefin film. A polyolefin may be a polyethylene.

Regarding a material of a sealant layer, a polyolefin-based resin of a thermoplastic resin is generally used. Specifically, ethylene-based resins such as a low-density polyethylene resin (LDPE), a medium-density polyethylene resin (MDPE), a linear low-density polyethylene resin (LLDPE), an ethylene-vinyl acetate copolymer (EVA), an ethylene-$\alpha$olefin copolymer, and an ethylene-(meta)acrylic acid copolymer; a blended resin of a polyethylene and a polybutene; polypropylene-based resins such as a homopolypropylene resin (PP), a propylene-ethylene random copolymer, a propylene-ethylene block copolymer, and a propylene-$\alpha$-olefin copolymer; or the like can be used. These thermoplastic resins can be suitably selected depending on the purpose of usage or temperature conditions such as boiling treatment.

Various kinds of additives such as a flame retardant, a slipping agent, an anti-blocking agent, an oxidation inhibitor, a light stabilizer, and a tackifier may be added to the sealant layer.

A thickness of the sealant layer is determined based on a mass of a content, a shape of a packaging bag, and the like. However, the thickness is preferably approximately 30 to 150 $\mu$m.

Regarding a method for forming a sealant layer, a sealant layer can be formed by any known lamination method such as a method in which a film-shaped sealant layer made of the thermoplastic resin described above is pasted with the adhesive for forming the gas barrier adhesive layer 4 described above, a dry lamination method in which it is pasted with an adhesive such as a one-component curing-type or two-component curing-type urethane-based adhesive, a non-solvent dry lamination method in which a film-shaped sealant layer is pasted with a non-solvent adhesive, and an extrusion lamination method in which the thermoplastic resin described above is subjected to heat fusion, extruded into a curtain shape, and pasted.

On the other hand, when the first resin layer 5 is not a sealant layer, the first resin layer 5 can have a constitution similar to that of the base material layer 1.

[Print layer 6]

The print layer 6 is provided at a position where it can be seen from the outward side of a gas barrier laminate for the purpose of displaying information related to the content, identification of the content, or improvement in design of a packaging bag. A printing method and a print ink are not particularly limited and are suitably selected in consideration of known printing methods, printing suitability of a print ink with respect to a film, design such as a color tone, adhesive properties, and safety as a food container. Regarding a printing method, for example, a gravure printing method, an offset printing method, a gravure offset printing method, a flexo-printing method, an inkjet printing method, or the like can be used. Among these, from a viewpoint of productivity and a high definition of a pattern, a gravure printing method can be preferably used. Regarding an ink, from a viewpoint of an environmental consideration, a biomass ink or a biodegradable ink may be used.

In order to enhance the adhesive properties of the print layer 6, a surface of a layer where the print layer 6 is formed (the base material layer 1, the first resin layer 5, or the second resin layer 7) may be subjected to various kinds of preliminary treatment such as corona treatment, plasma treatment, and frame treatment or may be provided with a coat layer such as an easily adhesive layer.

[Second resin layer 7]

The second resin layer 7 is a layer including a polyolefin. A content of a polyolefin in the second resin layer 7 may be 50 mass% or more, may be 80 mass% or more, or may be 100 mass% based on the total content of the second resin layer 7. The second resin layer 7 may include a polyolefin which is biomass-derived or recycled. The second resin layer 7 may be a sealant layer. The sealant layer is constituted as described above.

On the other hand, when the second resin layer 7 is not a sealant layer, the second resin layer 7 can have a constitution similar to that of the base material layer 1.

Here, lamination positions of the print layer 6 and the second resin layer 7 are not particularly limited. For example, the second resin layer 7 may be formed on a surface of the base material layer 1 on a side opposite to the undercoat layer 2, may be formed on a surface of the first resin layer 5 on a side opposite to the gas barrier adhesive layer 4, or may be formed between the gas barrier adhesive layer 4 and the first resin layer 5. The second resin layer 7 may be laminated on another layer with the adhesive layer 8 constituted of a general adhesive therebetween.

For example, the print layer 6 may be formed on a surface of the base material layer 1 on a side opposite to the undercoat layer 2, may be formed on a surface of the first resin layer 5 on a side opposite to the gas barrier adhesive layer 4, or may be formed between the gas barrier adhesive layer 4 and the first resin layer 5. When a gas barrier laminate includes the second resin layer 7, the print layer 6 may be formed on a surface of the second resin layer 7 on one side. In this case, the print layer 6 may be formed on the second resin layer 7 in advance, and the second resin layer 7 having the print layer 6 formed thereon may be laminated on another layer with the adhesive layer 8 therebetween.

[Adhesive layer 8]

Regarding an adhesive Constituting the adhesive layer 8, a known adhesive Can be used. Regarding a material of an adhesive, for example, a polyester-isocyanate-based resin, a urethane resin, a polyether-based resin, or the like can be used. In addition, regarding an adhesive, the adhesive for forming the gas barrier adhesive layer 4 described above may be used. From a viewpoint of an environmental consideration, an adhesive having biomass-derived high molecular components or an adhesive having biodegradable properties may be used as the adhesive.

[Heat fusion temperature of each layer]

In the gas barrier laminate described above, a heat fusion temperature difference between two layers farthest away from each other in three layers including the base material layer 1, the first resin layer 5, and the second resin layer 7 is preferably 10°C or greater, more preferably 15°C or greater, and further preferably 20°C or greater. When a gas barrier laminate is molded into a packaging bag, one of the foregoing two layers farthest from each other becomes a sealant layer. Therefore, it is easy to mold a gas barrier laminate into a packaging bag or the like through heat sealing by setting the foregoing heat fusion temperature difference within the foregoing range.

A heat fusion temperature of the base material layer 1 is preferably 100°C or higher and more preferably 120°C or higher. If the heat fusion temperature is 100°C or higher, a difference between melting points (heat fusion temperature difference) of the sealant layer and the base material layer 1 increases, and thus there is a tendency that heat sealing is likely to be performed. The heat fusion temperature of the base material layer 1 is preferably higher than the heat fusion temperature of the sealant layer.

In addition, in the first resin layer 5 and the second resin layer 7, the heat fusion temperature of a layer used as a sealant layer is preferably adjusted in accordance with the kind of a polyolefin included in the sealant layer. For example, when a polyolefin included in the sealant layer is a polyethylene, the heat fusion temperature of the sealant layer is preferably 130°C or lower and more preferably 110°C or lower. In addition, when a polyolefin included in the sealant layer is a polypropylene, the heat fusion temperature of the sealant layer is preferably 160°C or lower and more preferably 150°C or lower. If the heat fusion temperature is equal to or lower than the foregoing upper limit value, a difference between melting points (heat fusion temperature difference) of a layer which is not the sealant layer in the first resin layer 5 and the second resin layer 7, and the base material layer 1 increases, and thus there is a tendency that heat sealing is likely to be performed. A preferable range of the heat fusion temperature of the layer which is not the sealant layer in the first resin layer 5 and the second resin layer 7 is similar to that of the base material layer 1.

Here, the heat fusion temperature of each layer is a heat sealing temperature of a measurement target layer which is measured by a measurement method in conformity with JIS Z0238:1998. Specifically, two measurement target layers are caused to overlap each other, and when a heat sealing portion is formed through heating at a pressure of 0.2 MPa for one second, the lowest temperature at which the heat sealing portion which is heat-sealed and does not peel off can be formed is regarded as the heat fusion temperature using a heat sealing tester.

[Glass transition temperature (Tg) of each layer]

In the gas barrier laminate described above, a Tg difference between the undercoat layer 2 and the gas barrier adhesive layer 4 is preferably 100°C or smaller, more preferably 80°C or smaller, further preferably 50°C or smaller, and particularly preferably 30°C or smaller. If this Tg difference is within the foregoing range, it is possible to more sufficiently curb breaking in the inorganic oxide layer 3 due to stress applied to the inorganic oxide layer 3 disposed between the undercoat layer 2 and the gas barrier adhesive layer 4 at the time of heat sealing or at the time of processing of a gas barrier laminate.

The Tg of the undercoat layer 2 is preferably 20°C to 180°C and more preferably 40°C to 150°C. If the Tg is 180°C or lower, since the undercoat layer 2 is not excessively hard, it is likely to follow the flexibility of the base material layer 1, and thus peeling of the undercoat layer 2 causing degradation of adhesive properties during lamination is likely to be curbed. On the other hand, if the Tg is 20°C or higher, since the Tg is equal to or lower than room temperature, a situation in which the undercoat layer 2 becomes excessively soft can be curbed, and a situation in which the inorganic oxide layer 3 cannot follow the undercoat layer 2, cracking occurs, and barrier properties are degraded can be curbed.

The Tg of the gas barrier adhesive layer 4 is preferably 20°C to 180°C and more preferably 40°C to 150°C. If the Tg is 180°C or lower, since the gas barrier adhesive layer 4 is not excessively hard, it is likely to follow the flexibility of the base material layer 1, and thus peeling of the gas barrier adhesive layer 4 causing degradation of adhesive properties during lamination is likely to be curbed. On the other hand, if the Tg is 20°C or higher, since the Tg is equal to or lower than room temperature, movement of molecules constituting the gas barrier adhesive layer 4 at room temperature is likely to be curbed, and insufficient manifestation of barrier properties can be curbed.

Here, for example, the Tg of each layer can be measured by the following method. A composition (coating liquid) for forming each layer is input to a container, and a solvent is eliminated and cured at 60°C throughout a day. Next, the cured product is taken out. Using a differential scanning calory measurement instrument, an initial temperature is set to 0°C, and the cured product is retained at 0°C for five minutes. Thereafter, the temperature is continuously raised up to 200°C at a temperature raising rate of 10°C/min. Thereafter, the cured product is cooled and retained at 0°C for five minutes. Thereafter, a peak which appears when the temperature is continuously raised up to 200°C at a temperature raising rate of 10°C/min under measurement conditions referred to as a second run is regarded as the Tg. Since the coating liquid is cured in a container for the sake of measurement, when measurement is performed using a differential scanning calory measurement instrument, the peak which appears at the time of the first temperature rise is significantly affected by a solvent and an uncured product so that it is difficult to read the Tg. Therefore, a peak obtained from the second run is regarded as the Tg of each layer.

As described above, all the films constituting a gas barrier laminate can be polyolefin films. It is possible to mention that such a gas barrier laminate is a packaging material formed of a single material (mono-material) having excellent recycling efficiency. From this viewpoint, the total mass of components (for example, components of an adhesive And an ink) other than polyolefin components with respect to the whole mass of a gas barrier laminate can be 10 mass% or smaller, and it may be 7.5 mass% or smaller.

A thickness of a gas barrier laminate can be suitably determined in accordance with the purpose thereof. For example, the thickness of a gas barrier laminate can be 0.01 to 10 mm and preferably 0.1 to 1.0 mm.

A gas barrier laminate can be favorably used for various purposes including packaging products such as containers and bags, sheet molded articles such as decorative sheets and trays, optical films, resin plates, various kinds of label materials, lid members, laminate tubes, and the like. Particularly, it can be favorably used for a packaging product. Examples of a packaging product include a pillow bag, a standing pouch, a three-side sealed bag, and a four-side sealed bag.

<Packaging bag>

A packaging bag is made as a bag with the gas barrier laminate described above. A packaging bag may have a bag shape by folding one gas barrier laminate in half such that sealant layers face each other and then heat-sealing three sides thereof or may have a bag shape by causing two gas barrier laminates to overlap each other such that sealant layers face each other and then heat-sealing four sides thereof. A packaging bag can store a content such as food or medical supplies as a content thereof. A packaging bag can be subjected to heat sterilization treatment such as retort treatment or boiling treatment.

Retort treatment is a method for performing pressure sterilization of microorganisms such as fungi, yeast, or bacteria in order to store food, medical supplies, or the like in general. Normally, a packaging bag having food or the like packaged therein is subjected to pressure sterilization treatment under conditions of 105°C to 140°C and 0.15 to 0.30 MPa for 10 to 120 minutes. Regarding retort devices, there are a steam type utilizing heating steam and a hot water type utilizing pressure-heated water, and they are suitably used in accordance with sterilization conditions for food or the like which will become a content.

Boiling treatment is a method for performing moist heat sterilization in order to store food, medical supplies, or the like. Normally, although it depends on a content as well, a packaging bag having food or the like packaged therein is subjected to moist heat sterilization treatment under conditions of 60°C to 100°C and atmospheric pressure for 10 to 120 minutes. Regarding boiling treatment, normally, the treatment is performed at 100°C or lower using a hot water tank. Regarding a method thereof, there are batch-type treatment in which a packaging bag is immersed in a hot water tank at a certain temperature for a certain time and is taken out thereafter, and continuous tunnel-type treatment in which a packaging bag passes through the inside of a hot water tank. The packaging bag of the present embodiment can also be favorably used for the purpose of boiling treatment.

In addition, a packaging bag may have a shape of a standing pouch or the like having a bent portion (folded portion). The packaging bag of the present embodiment can maintain high gas barrier properties even if it has a shape with a bent portion.

Examples of another form of a packaging bag include a packaging bag with a mouth plug. Examples of a structure of a packaging bag with a mouth plug include a structure in which a mouth plug is thrust into two gas barrier laminates for forming a packaging bag and is fixed therein, and a structure in which a hole is drilled on one surface of a packaging bag and a spout is adhered and fixed thereto. A spout can also be provided on an upper surface of a packaging bag, may be provided obliquely above a packaging bag, or can also be provided on a side surface or a bottom surface of a packaging bag. When a content is food which is liquefied or gelatinous, a straw reaching a container bottom portion may be provided therein in addition to a spout plug (so-called spout) such that the food can be directly suctioned out through the mouth.

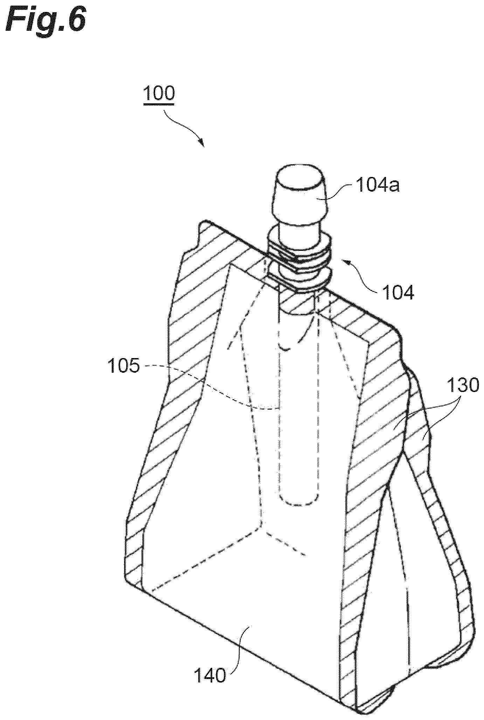

FIG. 6 is a perspective view illustrating an embodiment of a packaging bag with a mouth plug (gazette bag with a spout). A packaging bag 100 with a mouth plug illustrated in FIG. 6 has a structure in which a mouth plug 104 is thrust into a seal portion 130 of a gas barrier laminate for forming a packaging bag 140 and is fixed thereto, and a straw 105 reaching a container bottom portion is provided in the mouth plug 104. In addition, the packaging bag 100 with a mouth plug can be sealed by closing a mouth plug cap 104a. The packaging bag 140 constituting the packaging bag 100 with a mouth plug may be a gazette bag of which a lower portion of the bag expands and which has a shape swelling downward when it is filled with a content such that it can stand by itself.

In addition, since the gas barrier laminate of the present embodiment has a base material layer including a polyolefin and a resin layer including a polyolefin, it is soft and retains high gas barrier properties even after bending so that it can also be favorably used as a squeeze pouch. A resealable mouth plug may be provided in a squeeze pouch, or a disposable structure in which a pouch is cut and a spout is provided may be adopted.

Examples of another form of a packaging bag with a mouth plug include a bag-in-box in which a bag (inner bag) for storing a liquid such as soft drink or alcohol beverage is accommodated in a carton (outer case). The gas barrier laminate of the present embodiment can be used in the foregoing bag of a bag-in-box, particularly in a bag main body including a spouting mouth plug (tube).

In any case of the packaging bag with a mouth plug described above, it is preferable to use the same resin as those of the base material layer and the resin layer of the gas barrier laminate for a mouth plug part or a mouth plug in its entirety including a cap from a viewpoint of improving recycling efficiency.

In addition, the gas barrier laminate of the present embodiment can be used in a body portion of a tube container. Generally, a tube container is constituted of a body portion formed of a gas barrier laminate and a spout portion manufactured through extrusion molding. The spout portion is constituted of a mouth plug portion for discharging a content, and a shoulder portion for introducing a content held in the body portion into the mouth plug portion.

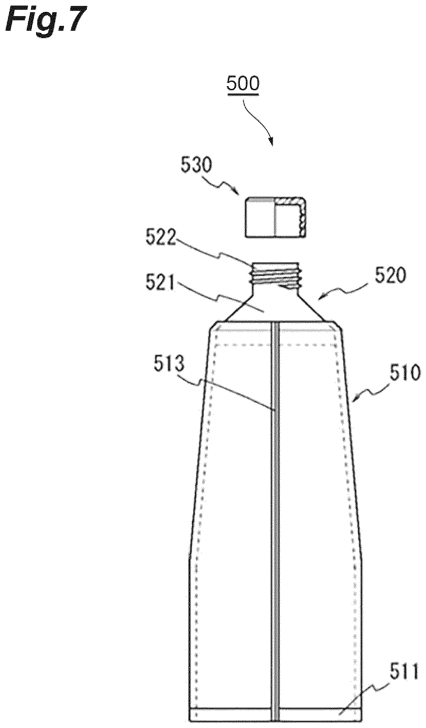

FIG. 7 is a front view illustrating an embodiment of a tube container. A tube container 500 illustrated in FIG. 7 includes a body portion 510 which is formed of a gas barrier laminate, a spout portion 520 which is attached to one end of the body portion 510, and a cap 530 which is attached to the spout portion 520. The body portion 510 is a tubular member which is formed such that sealant layers of a gas barrier laminate are pasted together in a seal portion 513 and a bottom portion 511 positioned at the other end on a side opposite to one end having the spout portion 520 attached thereto is blocked so that a content can be stored. The spout portion 520 is constituted of a mouth plug portion 522 for discharging a content, and a shoulder portion 521 for introducing a content held in the body portion 510 into the mouth plug portion 522. The cap 530 is a member allowing an opening of the mouth plug portion 522 to be blocked and opened.

Since the gas barrier laminate of the present embodiment has gas barrier properties and retains high gas barrier properties even after bending, it is suitable for being used in a body portion of the tube container described above which is repeatedly subjected to folding and bending when a content is squeezed out. Regarding a layer constitution of a body portion of a laminate tube which is a kind of a tube container, for example, a first resin layer (sealant layer), a gas barrier adhesive layer, an inorganic oxide layer, an undercoat layer, a base material layer, an adhesive layer, and a second resin layer (sealant layer) can be provided from the innermost layer. Alternatively, a second resin layer (sealant layer), an adhesive layer, a base material layer, an undercoat layer, an inorganic oxide layer, a gas barrier adhesive layer, and a first resin layer (sealant layer) can be provided from the innermost layer. A print layer may be provided on one surface of the second resin layer to be pasted on the base material layer with an adhesive layer therebetween or may be provided on one surface of the first resin layer to be pasted on a surface forming the inorganic oxide layer of the base material layer with a gas barrier adhesive layer therebetween. Alternatively, regarding a tube container body portion, a body portion can also be formed to have a tubular shape by having a first or second resin layer (outermost layer) which is not a sealant layer to be a resin layer similar to the base material layer which is not aimed at heat sealing and causing sealant layers (innermost layers) at end portions (seal portions) of a gas barrier laminate to face each other so as to be pasted together. In this case, since there is no need to cause the outermost layer to be a sealant layer, a high-density polyethylene or a polypropylene resin can be selected as a material of the outermost layer, and thus durability and beauty of a tube container can be enhanced. In addition, since a sealant layer generally requires a thickness of 60 to 100 $\mu$m, a base material layer (having a thickness of approximately 20 to 30 $\mu$m) which is not a sealant layer can be used as an outermost layer, and thus an amount of plastic used for the entire container can be significantly reduced. In a constitution in which the first resin layer is adopted as a sealant layer on the innermost layer side, the second resin layer is not provided while having the outermost layer to be a base material layer, and thus an amount of plastic used for the entire tube container can be further reduced. In this case, a print layer is formed on the base material layer which is the outermost layer, and it may be protected by overprint varnishing. In a tube container in which no sealant layer is provided as the outermost layer, since the thickness of the laminate of the body portion is smaller than that of the tube container in which the sealant layer is provided on both surfaces of the laminate, it is conceivable that stress at the time of bending applied to a gas barrier layer is relatively significant. However, since the laminate of the present embodiment has gas barrier properties and retains high gas barrier properties even after bending, it can be preferably used. Regarding a shape of a tube container, a shoulder portion can also be vertically provided without providing tapering with respect to the body portion such that a content can be squeezed out to the end. Recycling suitability can be improved by forming the base material layer and the sealant layer of a gas barrier laminate using the same resin. A material of the spout portion and the cap in the tube container is not particularly limited. However, recycling suitability can be further improved by forming them using the same resin as the base material layer. In a tube container, in order to maintain sealing until the first opening, an easily peelable film for blocking an opening portion may be pasted from the outside of the mouth plug portion. The gas barrier laminate of the present embodiment can also be combined with an easily peelable sealant to be used as a lid member for sealing such an opening portion.

[Example]

The present disclosure will be described in more detail using the following examples. However, the present disclosure is not limited to these examples.

[Preparation for composition for forming undercoat layer]

An acrylic polyol and a tolylene diisocyanate were mixed such that the number of NCO groups in the tolylene diisocyanate became equivalent to the number of OH groups in the acrylic polyol, and the liquid mixture was diluted with an ethyl acetate such that the total solid content (total amount of the acrylic polyol and the tolylene diisocyanate) became 5 mass%. A $\beta$-(3,4-epoxy cyclohexyl)trimethoxysilane was further added to the diluted liquid mixture such that the amount thereof became 5 parts by mass with respect to the total amount of 100 parts by mass of the acrylic polyol and the tolylene diisocyanate, and a composition for forming an undercoat layer (anchor coat agent) was prepared by mixing these.

[Preparation for adhesive for forming gas barrier adhesive layer] (Adhesive A)

MAXIVE C93T of 16 parts by mass manufactured by MITSUBISHI GAS CHEMICAL COMPANY, INC. and MAXIVE M-100 of 5 parts by mass manufactured by MITSUBISHI GAS CHEMICAL COMPANY, INC. were mixed into a solvent of 23 parts by mass in which an ethyl acetate and a methanol were mixed in a mass ratio of 1:1, and an adhesive A (epoxy-based adhesive) was prepared.

(Adhesive B)

Paslim VM108CP of 25 parts by mass manufactured by DIC CORPORATION and an ethyl acetate of 25 parts by mass were mixed into Paslim VM001 of 100 parts by mass manufactured by DIC CORPORATION, and an adhesive B (polyester/polyurethane-based adhesive) was prepared.

(Adhesive C)

TAKENATE A52 of 11 parts by mass manufactured by MITSUI CHEMICALS, INC. and an ethyl acetate of 84 parts by mass were mixed into TAKELAC A525 of 100 parts by mass manufactured by MITSUI CHEMICALS, INC., and an adhesive C (urethane-based adhesive) was prepared.

(Adhesive D)

CAT-EP5 of 6 parts by mass manufactured by TOYO INK CO., LTD. and an isopropyl alcohol of 54 parts by mass were mixed into AD393 of 100 parts by mass manufactured by TOYO INK CO., LTD., and an adhesive D (epoxy-based adhesive) was prepared.

[Example 1]

(Formation of undercoat layer (anchor coat layer))

A corona treatment surface of an unstretched high-density polyethylene film (thickness of 32 $\mu$m) serving as a base material layer having an A4 size was coated with the foregoing composition for forming an undercoat layer using a wire bar and was dried and cured at 60°C, and an undercoat layer having 0.1 g/m$^2$ of a coating amount of an acrylic urethane-based resin was formed.

(Formation of inorganic oxide layer (silica vapor deposition film))

On the foregoing undercoat layer, a transparent inorganic oxide layer (silica vapor deposition film) made of a silicon oxide having a thickness of 30 nm was formed through a vacuum vapor deposition device of an electron beam heating type. Regarding the silica vapor deposition film, the kind of the vapor deposition material was adjusted, and a vapor deposition film having an O/Si ratio of 1.8 was formed.

(Production of gas barrier laminate)

The adhesive A was coated using a wire bar on the foregoing inorganic oxide layer and dried at 60°C to form a gas barrier adhesive layer having a thickness of 3 $\mu$m. Thereafter, an unstretched film (manufactured by MITSUI CHEMICALS TOHCELLO, INC., trade name: TUX-MCS) formed of a linear low-density polyethylene resin (LLDPE) having a thickness of 60 $\mu$m was pasted as a first resin layer (sealant layer). Thereafter, aging was performed at 40°C for four days. Accordingly, a gas barrier laminate having a laminate structure including a base material layer, an undercoat layer, an inorganic oxide layer, a gas barrier adhesive layer, and a first resin layer (sealant layer) was obtained.

[Example 2]

A gas barrier laminate was obtained in a manner similar to Example 1 except that an inorganic oxide layer was formed by the following method. That is, a transparent inorganic oxide layer (alumina vapor deposition film) formed of an aluminum oxide having a thickness of 15 nm was formed on the undercoat layer using a vacuum vapor deposition device of an electron beam heating type.

[Examples 3 to 4]

A gas barrier laminate was obtained in a manner similar to Example 1 except that the thicknesses of inorganic oxide layers (silica vapor deposition films) were changed as shown in Table 1.

[Example 5]

A gas barrier laminate was obtained in a manner similar to Example 1 except that the adhesive B was used in place of the adhesive A.

[Comparative Example 1]

A gas barrier laminate was obtained in a manner similar to Example 1 except that no undercoat layer was formed.

[Comparative Example 2]

A gas barrier laminate was obtained in a manner similar to Example 1 except that no inorganic oxide layer was formed.

[Comparative Example 3]

A gas barrier laminate was obtained in a manner similar to Example 1 except that the adhesive C was used in place of the adhesive A and the thickness of the adhesive layer was set to 2.5 $\mu$m. The adhesive layer formed using the adhesive C did not have gas barrier properties.

[Comparative Example 4]

A gas barrier laminate was obtained in a manner similar to Example 1 except that the adhesive D was used in place of the adhesive A. The adhesive layer formed using the adhesive D did not have gas barrier properties.

[Example 6]

(Formation of undercoat layer (anchor coat layer))

In the present example, a gas barrier laminate was produced in a roll-to-roll manner. First, a corona treatment surface of an unstretched high-density polyethylene film (thickness of 32 $\mu$m) having a width of 1 m was coated with the foregoing composition for forming an undercoat layer by a gravure roll coat method and was dried and cured at 60°C, and an undercoat layer having a coating amount of an acrylic urethane-based resin of 0.1 g/m$^2$ was formed.

(Formation of inorganic oxide layer (silica vapor deposition film))

On the foregoing undercoat layer, a transparent inorganic oxide layer (silica vapor deposition film) made of a silicon oxide having a thickness of 30 nm was formed through a vacuum vapor deposition device of an electron beam heating type. Regarding the silica vapor deposition film, the kind of the vapor deposition material was adjusted, and a vapor deposition film having an O/Si ratio of 1.8 was formed.

(Production of gas barrier laminate)

The adhesive A was coated by a gravure coating method on the foregoing inorganic oxide layer and dried at 60°C to form a gas barrier adhesive layer having a thickness of 3 $\mu$m. Thereafter, an unstretched film (manufactured by MITSUI CHEMICALS TOHCELLO, INC., trade name: TUX-MCS) formed of a linear low-density polyethylene resin (LLDPE) having a thickness of 60 $\mu$m was pasted as a first resin layer (sealant layer). Thereafter, aging was performed at 40°C for four days. Accordingly, a gas barrier laminate having a laminate structure including a base material layer, an undercoat layer, an inorganic oxide layer, a gas barrier adhesive layer, and a first resin layer (sealant layer) was obtained.

[Example 7]

A gas barrier laminate was obtained in a manner similar to Example 6 except that a stretched high-density polyethylene film (manufactured by TOKYO PRINTING INK MFG. CO., LTD., trade name: SMUQ, a thickness of 25 $\mu$m) was used as a base material layer.

[Example 8]

A gas barrier laminate was obtained in a manner similar to Example 6 except that an unstretched medium-density polyethylene film (manufactured by TAMAPOLY CO., LTD., trade name: UB-3, a thickness 40 of $\mu$m) was used as a base material layer.

[Example 9]

A gas barrier laminate was obtained in a manner similar to Example 6 except that an unstretched film (manufactured by MITSUI CHEMICALS TOHCELLO, INC., trade name: TUX-MCS) formed of a linear low-density polyethylene resin (LLDPE) having a thickness of 100 $\mu$m was used as a first resin layer (sealant layer).

[Example 10]

(Formation of undercoat layer (anchor coat layer))

In the present example, a gas barrier laminate was produced in a roll-to-roll manner. First, a corona treatment surface of an unstretched medium-density polyethylene film (manufactured by TAMAPOLY CO., LTD., trade name: UB-3, a thickness 40 of $\mu$m) having a width of 1 m was coated with the foregoing composition for forming an undercoat layer by a gravure roll coat method and was dried and cured at 60°C, and an undercoat layer having a coating amount of an acrylic urethane-based resin of 0.1 g/m$^2$ was formed.

(Formation of inorganic oxide layer (silica vapor deposition film))

On the foregoing undercoat layer, a transparent inorganic oxide layer (silica vapor deposition film) made of a silicon oxide having a thickness of 30 nm was formed through a vacuum vapor deposition device of an electron beam heating type. Regarding the silica vapor deposition film, the kind of the vapor deposition material was adjusted, and a vapor deposition film having an O/Si ratio of 1.8 was formed.

(Production of gas barrier laminate)

The adhesive A was coated by a gravure coating method on the foregoing inorganic oxide layer and dried at 60°C to form a gas barrier adhesive layer having a thickness of 3 $\mu$m. Thereafter, an unstretched film (manufactured by TAMAPOLY CO., LTD., trade name: LK410L) formed of a linear low-density polyethylene resin (LLDPE) having a thickness of 100 $\mu$m was pasted as a first resin layer (sealant layer). Thereafter, aging was performed at 40°C for four days. Accordingly, a gas barrier laminate having a laminate structure including a base material layer, an undercoat layer, an inorganic oxide layer, a gas barrier adhesive layer, and a first resin layer (sealant layer) was obtained.

[Example 11]

(Formation of undercoat layer (anchor coat layer))

In the present example, a gas barrier laminate was produced in a roll-to-roll manner. First, a corona treatment surface of an unstretched high-density polyethylene film (thickness of 32 $\mu$m) having a width of 1 m was coated with the foregoing composition for forming an undercoat layer by a gravure roll coat method and was dried and cured at 60°C, and an undercoat layer having a coating amount of an acrylic urethane-based resin of 0.1 g/m$^2$ was formed.

(Formation of inorganic oxide layer (silica vapor deposition film))

On the foregoing undercoat layer, a transparent inorganic oxide layer (silica vapor deposition film) made of a silicon oxide having a thickness of 30 nm was formed through a vacuum vapor deposition device of an electron beam heating type. Regarding the silica vapor deposition film, the kind of the vapor deposition material was adjusted, and a vapor deposition film having an O/Si ratio of 1.8 was formed.

(Formation of print layer)

A print layer was formed by printing a pattern on a surface of the base material layer on a side opposite to the undercoat layer using a printer.

(Production of gas barrier laminate)

The adhesive A was coated by a gravure coating method on the foregoing inorganic oxide layer and dried at 60°C to form a gas barrier adhesive layer having a thickness of 3 $\mu$m. Thereafter, an unstretched film (manufactured by TAMAPOLY CO., LTD., trade name: LK410L) formed of a linear low-density polyethylene resin (LLDPE) having a thickness of 100 $\mu$m was pasted as a first resin layer (sealant layer). Thereafter, aging was performed at 40°C for four days. Accordingly, a gas barrier laminate having a laminate structure including a print layer, a base material layer, an undercoat layer, an inorganic oxide layer, a gas barrier adhesive layer, and a first resin layer (sealant layer) was obtained.

[Example 12]

(Formation of undercoat layer (anchor coat layer))

In the present example, a gas barrier laminate was produced in a roll-to-roll manner. First, a corona treatment surface of an unstretched high-density polyethylene film (thickness of 32 $\mu$m) having a width of 1 m was coated with the foregoing composition for forming an undercoat layer by a gravure roll coat method and was dried and cured at 60°C, and an undercoat layer having a coating amount of an acrylic urethane-based resin of 0.1 g/m$^2$ was formed.

(Formation of inorganic oxide layer (silica vapor deposition film))

On the foregoing undercoat layer, a transparent inorganic oxide layer (silica vapor deposition film) made of a silicon oxide having a thickness of 30 nm was formed through a vacuum vapor deposition device of an electron beam heating type. Regarding the silica vapor deposition film, the kind of the vapor deposition material was adjusted, and a vapor deposition film having an O/Si ratio of 1.8 was formed.

(Formation of print layer)

A print layer was formed by printing a pattern on a corona treatment surface of a stretched high-density polyethylene film (manufactured by TOKYO PRINTING INK MFG. CO., LTD., trade name: SMUQ, a thickness of 25 $\mu$m) as the first resin layer using a printer.

(Production of gas barrier laminate)

The adhesive A was coated by a gravure coating method on the foregoing inorganic oxide layer and dried at 60°C to form a gas barrier adhesive layer having a thickness of 3 $\mu$m. Thereafter, the first resin layer having the print layer formed thereon was pasted while having the print layer side toward the gas barrier adhesive layer. Subsequently, the back surface of the base material layer was subjected to corona treatment, and the adhesive C was coated by a gravure coating method on the corona treatment surface and dried at 60°C to form a gas barrier adhesive layer having a thickness of 3 $\mu$m. Thereafter, an unstretched film (manufactured by TAMAPOLY CO., LTD., trade name: LK410L) formed of a linear low-density polyethylene resin (LLDPE) having a thickness of 100 $\mu$m was pasted as a second resin layer (sealant layer). Accordingly, a gas barrier laminate having a laminate structure including a second resin layer (sealant layer), an adhesive layer, a base material layer, an undercoat layer, an inorganic oxide layer, a gas barrier adhesive layer, a print layer, and a first resin layer was obtained.

[Example 13]

A gas barrier laminate was obtained in a manner similar to Example 1 except that a biaxially stretched polypropylene film (manufactured by MITSUI CHEMICALS TOHCELLO, INC., trade name: ME-1, a thickness of 20 $\mu$m, OPP film with an easily adhesive coat) was used as a base material layer and an unstretched polypropylene film (manufactured by TORAY ADVANCED FILM CO., LTD. trade name: TORAYFAN ZK207, CPP film) having a thickness of 60 $\mu$m was used as a first resin layer (sealant layer).

[Comparative Example 5]

A gas barrier laminate was obtained in a manner similar to Example 13 except that the adhesive C was used in place of the adhesive A and the thickness of the adhesive layer was set to 2.5 $\mu$m. The adhesive layer formed using the adhesive C did not have gas barrier properties.

[Measurement of physical properties]

(Thermal shrinkage rate)

Regarding the base material layer, the thermal shrinkage rate in the traveling direction (MD direction) and the vertical direction (TD direction) after heating at 100°C for 15 minutes was measured. The thermal shrinkage rate (%) is a value calculated by the following expression.

$$\text{Thermal shrinkage rate (\%)} = \{(\text{length before heating} - \text{length after heating})/\text{length before heating}\} \times 100$$

A measurement procedure of the thermal shrinkage rate is as follows.

(1) The base material layer was cut out into 20 cm×20 cm to be used as a measurement sample.
(2) A line of 10 cm was marked in the MD direction or the TD direction of the measurement sample (length before heating).
(3) The measurement sample was heated at 100°C for 15 minutes.
(4) The length of the marked line in the MD direction or the TD direction was measured (length after heating).
(5) The thermal shrinkage rate was calculated by the foregoing expression.

(Density)

The density of the base material layer was measured by the measurement method in conformity with JIS K7112:1999.

(Heat fusion temperature)

Regarding the heat fusion temperatures of the base material layer, the first resin layer, and the second resin layer, the heat sealing temperature of the measurement target layer was measured by the measurement method in conformity with JIS Z0238:1998. Specifically, two measurement target layers were caused to overlap each other, and when a heat sealing portion was formed through heating at a pressure of 0.2 MPa for one second, the lowest temperature at which the heat sealing portion which was heat-sealed and did not peel off could be formed was regarded as the heat fusion temperature using a heat sealing tester.

In addition, Tables 1 to 3 and 7 show heat fusion temperature differences between two layers farthest away from each other in three layers including the base material layer, the first resin layer, and the second resin layer. The two layers farthest from each other were the first resin layer and the second resin layer in Example 12 and were the base material layer and the first resin layer in other Examples and Comparative Examples.

(Glass transition temperature (Tg))

The Tg (°C) of the undercoat layer, the gas barrier adhesive layer, and the non-gas barrier adhesive layer was measured by the following method using a differential scanning calory measurement instrument. First, a composition (coating liquid) for forming each layer was input to a container, and a solvent was eliminated and cured at 60°C throughout a day. Next, the cured product was taken out. Using a differential scanning calory measurement instrument, the initial temperature was set to 0°C, and the cured product was retained at 0°C for five minutes. Thereafter, the temperature was continuously raised up to 200°C at a temperature raising rate of 10°C/min. Thereafter, the cured product was cooled at 0°C and retained for five minutes. Thereafter, a peak which appeared when the temperature was continuously raised up to 200°C at a temperature raising rate of 10°C/min under measurement conditions referred to as a second run was regarded as the Tg.

In addition, Table 1 to Table 3 and Table 7 show the Tg differences between the undercoat layer and the gas barrier adhesive layer or the non-gas barrier adhesive layer.

(Logarithmic decrement)

Aluminum foils having a thickness of 20 $\mu$m were respectively coated with the adhesives A to D using a wire bar and were dried at 60 °C, and coated films having a thickness of 3 $\mu$m were formed. Regarding these coated films, aging was performed at 50°C for four days, and sample test pieces were produced. The logarithmic decrement was measured using a rigid body pendulum-type physical property tester (manufactured by A&D COMPANY, trade name: RPT-3000W). Regarding a frame shape (pendulum), RBP-020 having a pipe diameter of 2 mm and a frame weight of 14 g was used. The measurement width was set to 20 mm, and a sample test piece was cut out for each of the aluminum foils and was fixed to a dedicated aluminum plate. The measurement temperature was set within a range of -80°C to 200°C, and the temperature raising rate was set to 10°C/min. Under these conditions, the logarithmic decrement was measured at three locations, data of the logarithmic decrement at 30°C was read, and the average value thereof was calculated. A small logarithmic decrement denotes that molecules of a resin constituting a surface of a measurement target is unlikely to move even if it receives heat.

(Oxygen transmission rate (OTR))

The oxygen transmission rates of the gas barrier adhesive layer and the non-gas barrier adhesive layer were measured by the following method. Corona treatment surfaces of polyethylene (PE) films (thickness of 32 $\mu$m) having an A4 size were respectively coated with the adhesives A to D using a wire bar and were dried and cured at 60°C, and coated films (gas barrier adhesive layers or non-gas barrier adhesive layers) having a thickness of 3 $\mu$m were formed. A laminate was obtained by pasting an unstretched film (manufactured by MITSUI CHEMICALS TOHCELLO, INC., trade name: TUX-MCS) formed of a linear low-density polyethylene resin (LLDPE) having a thickness of 60 $\mu$m on this coated film. The oxygen transmission rate of the obtained laminate was measured under conditions of the temperature of 30°C and a relative humidity of 70% (JIS K-7126, method B). Measurement was performed using an oxygen transmission rate measurement device (manufactured by MOCON, trade name: OX-TRAN2/20). Since the detection limit of this measurement device was 200 cc/$m^2$·day·atm, when a measurement value was equal to or larger than the detection limit, the oxygen transmission rate of the adhesive layer was regarded as "> 200 cc/m$^2$·day·atm".

[Evaluation of gas barrier laminate]

(Gas barrier properties before and after bending)

The gas barrier laminates obtained in Examples and Comparative Examples were cut out into pieces having a size of 295 mm (height)×210 mm (width) and used as samples for evaluation. These samples were attached to the fixing head of GELVO-TYPE FLEX-CRACKING TESTER (trade name: BE-1005) manufactured by TESTER SANGYO CO., LTD. such that they had a cylindrical shape having a diameter of 87.5 mm×210 mm. Both ends of the samples were held, and the initial holding interval was set to 175 mm. A twist of 440 degrees was applied thereto with a stroke of 87.5 mm, and the samples were bent by performing repeated reciprocal movement of this motion 10 times at a rate of 40 times/min. Regarding the samples before (initial) and after this bending test, the oxygen transmission rate (OTR) and the water vapor transmission rate (WTR) were measured. Tables 4 to 6 and 8 show the results thereof. A method for measuring the oxygen transmission rate and the water vapor transmission rate was as follows.
The oxygen transmission rate:

Oxygen transmission rate measurement device (manufactured by MOCON, trade name: OX-TRAN2/20)
Measurement under conditions of a temperature of 30°C and a relative humidity of 70% (JIS K-7126, method B)
Measurement values were expressed in units [cc/m$^2$·day·atm].

Water vapor transmission rate:

Water vapor transmission rate measurement device (manufactured by MOCON, trade name: PERMATRAN-W 3/33)
Measurement under conditions of a temperature of 40°C and a relative humidity of 90% (JIS K-7126, method B)
Measurement values were expressed in units [g/m$^2$·day].

(Gas barrier properties after boiling treatment)

The gas barrier laminates obtained in Examples 5 to 8 were cut out into pieces having a size of 15 cm×10 cm, two cut-out gas barrier laminates (packaging films) were caused to overlap each other such that the sealant layers thereof face each other, and they were subjected to three-side impulse sealing into a pouch shape. 200 ml of tap water was input to the inside of the pouch as a content, the remaining one side was subjected to impulse sealing, and pouches (packaging bags) having four sealed sides were thereby produced. With respect to the obtained pouches, boiling treatment was performed at 80°C for 30 minutes or at 95°C for 30 minutes using a boiling treatment device. After boiling, the pouches were opened, and the tap water inside the pouches was discarded. In a state of being sufficiently dried, the oxygen transmission rate (OTR) and the water vapor transmission rate (WTR) were measured by a method similar to the foregoing method. Table 5 shows the results. The appearances of the pouches after boiling were observed, and whether or not there was delamination, floating, or the like of the film was visually checked, but no problems were found in any of the pouches.

(Production of standing pouch)

Using the gas barrier laminates obtained in Examples 9 to 12, standing pouches having a width of 140 mm, a height of 210 mm, and a fold of 35 mm were produced using a bag making machine. The appearances of the pouches after being made into bags were observed, but no problems were found in any of the pouches. The insides of these pouches after being made into bags were filled with 100 g of liquid detergents for kitchen (manufactured by LION CORPORATION, trade name: CHARMY MAGICA) as contents, and they were stored at 40°C and 90%RH for one month. After being stored, the pouches were opened, the detergents inside the pouches were discarded, and the pouches were washed with tap water. In a state in which they were sufficiently dried, the oxygen transmission rate (OTR) and the water vapor transmission rate (WTR) were measured by a method similar to the foregoing method. Table 6 shows the results.

(Gas barrier properties after retort treatment)

The gas barrier laminates obtained in Example 13 and Comparative Example 5 were cut out into pieces having a size of 15 cm×20 cm. The cut-out gas barrier laminates (packaging films) were folded at a center portion in the longitudinal direction such that the sealant layers face each other and were subjected to two-side impulse sealing into a pouch shape. 200 ml of tap water was input to the inside of the pouch as a content, the remaining one side was subjected to impulse sealing, and pouches (packaging bags) having three sealed sides were thereby produced. With respect to the obtained pouches, retort treatment was performed at 0.2 MPa and 121°C for 30 minutes or retort treatment was performed at 0.27 MPa and 130°C for 30 minutes (high-retort treatment) using a retort device. After retort treatment, the pouches were opened, and the tap water inside the pouches was discarded. In a state in which they were sufficiently dried, the oxygen transmission rate (OTR) and the water vapor transmission rate (WTR) were measured by a method similar to the foregoing method. Table 8 shows the results. The appearances of the pouches after retort treatment were observed, and whether or not there was delamination, floating, or the like of the film was visually checked, but no problems were found in any of the pouches.

[Table 1]

| | Base material layer | | | | | Under-coat layer | Inorganic vapor deposition layer | | Gas barrier adhesive layer or non-gas barrier adhesive layer | | | | | First resin layer | | | Thickness ratio (adhesive layer/vapor deposition layer) | Heat fusion temperature difference (°C) | Tg difference (°C) |
| | Material | Thickness (μm) | Thermal shrinkage rate (%) | | Density | Heat fusion temperature (°C) | Tg (°C) | Material | Thickness (μm) | Material 1 | Thickness (μm) | Logarithmic decrement | OTR (cc/m²·day·at m) | Tg (°C) | Material | Thickness (μm) | Heat fusion temperature (°C) | | | |
| | | | MD | TD | | | | | | | | | | | | | | | | |
| Example 1 | Un-stretched HDPE | 32 | 0.0 | 1.0 | 0.956 | 140 | 130 | Silica | 30 | Adhesive A | 3.0 | 0.02 | 28 | 108 | Un-stretched LLDPE | 60 | 115 | 100 | 25 | 22 |
| Example 2 | Un-stretched HDPE | 32 | 0.0 | 1.0 | 0.956 | 140 | 130 | Alumina | 15 | Adhesive A | 3.0 | 0.02 | 28 | 108 | Un-stretched LLDPE | 60 | 115 | 200 | 25 | 22 |
| Example 3 | Un-stretched HDPE | 32 | 0.0 | 1.0 | 0.956 | 140 | 130 | Silica | 30 | Adhesive A | 1.5 | 0.02 | 45 | 108 | Un-stretched LLDPE | 60 | 115 | 50 | 25 | 22 |
| Example 4 | Un-stretched HDPE | 32 | 0.0 | 1.0 | 0.956 | 140 | 130 | Silica | 30 | Adhesive A | 5.0 | 0.02 | 20 | 108 | Un-stretched LLDPE | 60 | 115 | 167 | 25 | 22 |
| Example 5 | Un-stretched HDPE | 32 | 0.0 | 1.0 | 0.956 | 140 | 130 | Silica | 30 | Adhesive B | 3.0 | 0.02 | 78 | 51 | Un-stretched LLDPE | 60 | 115 | 100 | 25 | 79 |
| Comparative Example 1 | Un-stretched HDPE | 32 | 0.0 | 1.0 | 0.956 | 140 | - | Silica | 30 | Adhesive A | 3.0 | 0.02 | 28 | 108 | Un-stretched LLDPE | 60 | 115 | 100 | 25 | - |

| | Base material layer | | | | | | Undercoat layer | Inorganic vapor deposition layer | | Gas barrier adhesive layer or non-gas barrier adhesive layer | | | | | First resin layer | | | Thickness ratio (adhesive layer/vapor deposition layer) | Heat fusion temperature difference (°C) | Tg difference (°C) |
|---|---|---|---|---|---|---|---|---|---|---|---|---|---|---|---|---|---|---|---|---|
| | Material | Thickness (μm) | Thermal shrinkage rate (%) MD | TD | Density | Heat fusion temperature (°C) | Tg (°C) | Material | Thickness (μm) | Materia 1 | Thickness (μm) | Logarithmic decrement | OTR (cc/m²·day·at m) | Tg (°C) | Material | Thickness (μm) | Heat fusion temperature (°C) | | | |
| Comparative Example 2 | Unstretched HDPE | 32 | 0.0 | 1.0 | 0.956 | 140 | 130 | - | - | Adhesive A | 3.0 | 0.02 | 28 | 108 | Unstretched LLDPE | 60 | 115 | 100 | 25 | 22 |
| Comparative Example 3 | Unstretched HDPE | 32 | 0.0 | 1.0 | 0.956 | 140 | 130 | Silica | 30 | Adhesive C | 2.5 | 0.24 | > 200 | 7 | Unstretched LLDPE | 60 | 115 | 83 | 25 | 123 |
| Comparative Example 4 | Unstretched HDPE | 32 | 0.0 | 1.0 | 0.956 | 140 | 130 | Silica | 30 | Adhesive D | 3.0 | 0.24 | > 200 | -55 | Unstretched LLDPE | 60 | 115 | 100 | 25 | 185 |

EP 4 101 639 A1

[Table 2]

| | Base material layer | | | | | | Under-coat layer | Inorganic vapor deposition layer | | Gas barrier adhesive layer | | | | | First resin layer | | | Thickness ratio (adhesive layer/vapor deposition layer) | Heat fusion temperature difference (°C) | Tg difference (°C) |
|---|---|---|---|---|---|---|---|---|---|---|---|---|---|---|---|---|---|---|---|---|
| | Material | Thickness (μm) | Thermal shrinkage rate (%) | | Density | Heat fusion temperature (°C) | Tg (°C) | Material | Thickness (μm) | Material | Thickness (μm) | Logarithmic decrement | OTR (cc/m²·day·atm) | Tg (°C) | Material | Thickness (μm) | Heat fusion temperature (°C) | | | |
| | | | MD | TD | | | | | | | | | | | | | | | | |
| Example 6 | Un-stretched HDPE | 32 | 0.0 | 1.0 | 0.956 | 140 | 130 | Silica | 30 | Adhesive A | 3.0 | 0.02 | 28 | 108 | Un-stretched LLDPE | 60 | 115 | 100 | 25 | 22 |
| Example 7 | Un-stretched HDPE | 25 | 2.0 | -0.1 | 0.950 | 140 | 130 | Silica | 30 | Adhesive A | 3.0 | 0.02 | 28 | 108 | Un-stretched LLDPE | 60 | 115 | 100 | 25 | 22 |
| Example 8 | Un-stretched MDPE | 40 | 1.1 | -0.5 | 0.940 | 125 | 130 | Silica | 30 | Adhesive A | 3.0 | 0.02 | 28 | 108 | Un-stretched LLDPE | 60 | 115 | 100 | 10 | 22 |

[Table 3]

| | Base material layer | | | | | | Undercoat layer | Inorganic vapor deposition layer | | Gas barrier adhesive layer | | | | | First resin layer | | | Second resin layer | | | Thickness ratio (adhesive layer/ vapor deposition layer) | Heat fusion temperature difference (°C) | Tg difference (°C) |
|---|---|---|---|---|---|---|---|---|---|---|---|---|---|---|---|---|---|---|---|---|---|---|---|
| | Material | Thickness (μm) | Thermal shrinkage rate (%) MD | Thermal shrinkage rate (%) TD | Density | Heat fusion temperature (°C) | Tg(°C) | Material | Thickness (μm) | Material | Thickness (μm) | Logarithmic decrement | OTR (cc/m²·day·atm) | Tg (°C) | Material | Thickness (μm) | Heat fusion temperature (°C) | Material | Thickness (μm) | Heat fusion temperature (°C) | | | |
| Example 9 | Un-stretched HDPE | 32 | 0.0 | 1.0 | 0.956 | 140 | 130 | Silica | 30 | Adhesive A | 3.0 | 0.02 | 28 | 108 | Unstretched LLDPE | 100 | 115 | - | - | - | 100 | 25 | 22 |
| Example 10 | Unstretched MDPE | 40 | 1.1 | -0.5 | 0.940 | 140 | 130 | Silica | 30 | Adhesive A | 3.0 | 0.02 | 28 | 108 | Unstretched LLDPE | 100 | 100 | - | - | - | 100 | 40 | 22 |
| Example 11 | Unstretched HDPE | 32 | 0.0 | 1.0 | 0.956 | 140 | 130 | Silica | 30 | Adhesive A | 3.0 | 0.02 | 28 | 108 | Unstretched LLDPE | 100 | 100 | - | - | - | 100 | 40 | 22 |
| Example 12 | Unstretched HDPE | 32 | 0.0 | 1.0 | 0.956 | 140 | 130 | Silica | 30 | Adhesive A | 3.0 | 0.02 | 28 | 108 | Stretched HDPE | 25 | 140 | Unstretched LLDPE | 100 | 100 | 100 | 40 | 22 |

[Table 4]

| | Gas barrier properties | | | | | | | |
|---|---|---|---|---|---|---|---|---|
| | Initial | | After bending test | | After boiling at 80°C for 30 min | | After boiling at 90°C for 30 min | |
| | OTR (cc/m$^2$·day·atm) | WTR (g/m$^2$·day) | OTR (cc/m$^2$·day·atm) | WTR (g/m$^2$·day) | OTR (cc/m$^2$·day·atm) | WTR (g/m$^2$·day) | OTR (cc/m$^2$·day·atm) | WTR (g/m$^2$·day) |
| Example 1 | 0.3 | 0.2 | 3.5 | 0.3 | - | - | - | - |
| Example 2 | 1.2 | 1.5 | 12.1 | 2.5 | - | - | - | - |
| Example 3 | 0.3 | 0.2 | 9.2 | 0.4 | - | - | - | - |
| Example 4 | 0.3 | 0.2 | 2.0 | 0.3 | - | - | - | - |
| Example 5 | 0.6 | 0.4 | 14.2 | 0.5 | 4.0 | 1.4 | 24.3 | 1.6 |
| Comparative Example 1 | 8.4 | 1.6 | 19.0 | 2.0 | - | - | - | - |
| Comparative Example 2 | 20.0 | 2.5 | 20.5 | 3.0 | - | - | - | - |
| Comparative Example 3 | 3.4 | 0.5 | 42.0 | 0.7 | - | - | - | - |
| Comparative Example 4 | 3.5 | 0.5 | 50.0 | 1.0 | - | - | - | - |

[Table 5]

| | Gas barrier properties | | | | | | | |
|---|---|---|---|---|---|---|---|---|
| | Initial | | After bending test | | After boiling at 80°C for 30 min | | After boiling at 95°C for 30 min | |
| | OTR (cc/m²·day·atm) | WTR (g/m²·day) | OTR (cc/m²·day·atm) | WTR (g/m²·day) | OTR (cc/m²·day·atm) | WTR (g/m²·day) | OTR (cc/m²·day·atm) | WTR (g/m²·day) |
| Example 6 | 0.3 | 0.2 | 3.5 | 0.3 | 0.6 | 0.6 | 2.4 | 1.5 |
| Example 7 | 0.3 | 0.3 | 3.1 | 0.5 | 0.3 | 0.3 | 1.2 | 1.7 |
| Example 8 | 0.3 | 0.2 | 7.8 | 0.6 | 1.3 | 1.5 | 3.7 | 2.1 |

[Table 6]

| | Gas barrier properties | | | | | |
| --- | --- | --- | --- | --- | --- | --- |
| | Initial | | After bending test | | After storing content | |
| | OTR (cc/m$^2$·day·atm) | WTR (g/m$^2$·day) | OTR (cc/m$^2$·day·atm) | WTR (g/m$^2$·day) | OTR (cc/m$^2$·day·atm) | WTR (g/m$^2$·day) |
| Example 9 | 0.3 | 0.2 | 3.5 | 0.3 | 0.3 | 0.2 |
| Example 10 | 0.3 | 0.2 | 6.4 | 0.7 | 0.9 | 1.0 |
| Example 11 | 0.3 | 0.2 | 3.0 | 0.3 | 0.3 | 0.2 |
| Example 12 | 0.3 | 0.2 | 2.4 | 0.3 | 0.3 | 0.2 |

[Table 7]

| | Base material layer | | | | | | Under-coat layer | Inorganic vapor deposition layer | | Gas barrier adhesive layer or non-gas barrier adhesive layer | | | | | First resin layer | | | Thickness ratio (adhesive layer/vapor deposition layer) | Heat fusion temperature difference (°C) | Tg difference (°C) |
| | Material | Thickness (μm) | Thermal shrinkage rate (%) | | Density | Heat fusion temperature (°C) | Tg (°C) | Material | Thickness (μm) | Material | Thickness (μm) | Logarithmic decrement | OTR (cc/m²·day·atm) | Tg (°C) | Material | Thickness (μm) | Heat fusion temperature (°C) | | | |
| | | | MD | TD | | | | | | | | | | | | | | | | |
| Example 13 | Stretched OPP | 20 | 1.1 | 0.2 | 0.910 | 180 | 130 | Silica | 30 | Adhesive A | 3.0 | 0.02 | 28 | 108 | Unstretched CPP | 60 | 150 | 100 | 30 | 22 |
| Comparative Example 5 | Stretched OPP | 20 | 1.1 | 0.2 | 0.910 | 180 | 130 | Silica | 30 | Adhesive C | 2.5 | 0.24 | > 200 | 7 | Unstretched CPP | 60 | 150 | 83 | 30 | 123 |

[Table 8]

| | Gas barrier properties | | | | | | | |
|---|---|---|---|---|---|---|---|---|
| | Initial | | After bending test | | After retort at 121°C for 30 min | | After retort at 130°C for 30 min | |
| | OTR (cc/m$^2$·day·atm) | WTR (g/m$^2$·day) | OTR (cc/m$^2$·day·atm) | WTR (g/m$^2$·day) | OTR (cc/m$^2$·day·atm) | WTR (g/m$^2$·day) | OTR (cc/m$^2$·day·atm) | WTR (g/m$^2$·day) |
| Example 13 | 0.1 | 0.1 | 9.8 | 0.7 | 0.3 | 0.4 | 0.6 | 0.7 |
| Comparative Example 5 | 8.7 | 0.3 | 82.1 | 1.3 | - | 1.8 | - | 1.8 |

**Industrial Applicability**

A gas barrier laminate according to the present disclosure can maintain high gas barrier properties even after bending, and all of constituent films thereof can be practically polyolefin films. It is possible to mention that such a gas barrier laminate is a packaging material formed of a single material (mono-material), and excellent recycling efficiency is expected.

**Reference Signs List**

1: Base material layer, 2: Undercoat layer, 3: Inorganic oxide layer, 4: Gas barrier adhesive layer, 5: Resin layer (first resin layer), 6: Print layer, 7: Second resin layer, 8: Adhesive layer, 10, 20, 30, 40, 50: Gas barrier laminate, 100: Packaging bag with mouth plug, 104: Mouth plug, 105: Straw, 140: Packaging bag, 500: Tube container, 510: Body portion, 520: Spout portion, 530: Cap.

**Claims**

1. A gas barrier laminate which has a structure having a base material layer comprising a polyolefin, an undercoat layer, an inorganic oxide layer, a gas barrier adhesive layer, and a resin layer comprising a polyolefin laminated therein in this order.

2. The gas barrier laminate according to claim 1,
wherein a thickness of the gas barrier adhesive layer is equal to or larger than 50 times a thickness of the inorganic oxide layer.

3. The gas barrier laminate according to claim 1 or 2,
wherein an oxygen transmission rate of the gas barrier adhesive layer is 100 cc/m$^2$·day·atm or lower.

4. The gas barrier laminate according to any one of claims 1 to 3,
wherein a logarithmic decrement on a surface of the gas barrier adhesive layer measured at 30°C using a rigid body pendulum-type physical property tester is 0.1 or smaller.

5. The gas barrier laminate according to any one of claims 1 to 4,
wherein the gas barrier adhesive layer is a layer formed using an epoxy-based adhesive.

6. The gas barrier laminate according to any one of claims 1 to 5,
wherein the inorganic oxide layer comprises a silicon oxide.

7. The gas barrier laminate according to any one of claims 1 to 6,

wherein the resin layer is a sealant layer, and
wherein a heat fusion temperature difference between the base material layer and the sealant layer is 10°C or greater.

8. The gas barrier laminate according to any one of claims 1 to 7,
wherein a Tg difference between the undercoat layer and the gas barrier adhesive layer is 100°C or smaller.

9. The gas barrier laminate according to any one of claims 1 to 8 has a structure further having a print layer laminated therein.

10. The gas barrier laminate according to any one of claims 1 to 9 comprising a structure having the resin layer as a first resin layer and further having a second resin layer, different from the first resin layer, comprising a polyolefin laminated therein.

11. The gas barrier laminate according to claim 10,
wherein a heat fusion temperature difference between two layers farthest away from each other in three layers comprising the base material layer, the first resin layer, and the second resin layer is 10°C or greater.

**12.** A packaging bag made as a bag with the gas barrier laminate according to any one of claims 1 to 11.

*Fig.1*

# Fig.2

**Fig.3**

*Fig.4*

*Fig.5*

# *Fig.6*

**Fig.7**

## INTERNATIONAL SEARCH REPORT

| International application No. |
|---|
| PCT/JP2021/004153 |

### A. CLASSIFICATION OF SUBJECT MATTER
Int.Cl. B32B27/00(2006.01)i, B32B27/32(2006.01)i, B65D65/40(2006.01)i
FI: B32B27/32Z, B32B27/00H, B65D65/40D

According to International Patent Classification (IPC) or to both national classification and IPC

### B. FIELDS SEARCHED

Minimum documentation searched (classification system followed by classification symbols)
Int.Cl. B32B27/00, B32B27/32, B65D65/40

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2013-22918 A (DAI NIPPON PRINTING CO., LTD.) 04 February 2013 (2013-02-04), claims 1, 7, 9, 12, paragraphs [0052], [0061] | 1-2, 6-7, 9-12<br>3-5, 8 |
| Y | JP 2018-171796 A (DAI NIPPON PRINTING CO., LTD.) 08 November 2018 (2018-11-08), claims 1, 3, 11, paragraphs [0022], [0025]-[0027], example 6 | 1-9, 12 |
| Y | JP 2019-166779 A (DAI NIPPON PRINTING CO., LTD.) 03 October 2019 (2019-10-03), paragraph [0033], examples | 3-5, 8 |
| Y | JP 2014-144534 A (MITSUBISHI GAS CHEMICAL COMPANY, INC.) 14 August 2014 (2014-08-14), paragraphs [0061], [0062] | 3-5, 8 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 March 2021 | 20 April 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2021/004153

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-76288 A (DAI NIPPON PRINTING CO., LTD.) 19 April 2012 (2012-04-19), paragraphs [0041], [0042], [0122] | 3-5, 8 |
| Y | JP 2002-370749 A (DAI NIPPON PRINTING CO., LTD.) 24 December 2002 (2002-12-24), paragraph [0037] | 1-9, 12 |
| Y | JP 2020-11390 A (TOPPAN PRINTING CO., LTD.) 23 January 2020 (2020-01-23), paragraph [0044], examples | 1-9, 12 |

Form PCT/ISA/210 (second sheet) (January 2015)

**INTERNATIONAL SEARCH REPORT**
Information on patent family members

International application No.

*PCT/JP2021/004153*

```
JP 2013-22918 A      04 February 2013    (Family: none)

JP 2018-171796 A     08 November 2018    US 2020/0047960 A1
                                         claims 1, 5, 11, paragraphs [0070],
                                         [0073]-[0077], example 6
                                         WO 2018/181900 A1
                                         EP 3603955 A1

JP 2019-166779 A     03 October 2019     (Family: none)

JP 2014-144534 A     14 August 2014      US 2014/0373485 A1
                                         paragraphs [0291]-[0293]
                                         WO 2013/118882 A1
                                         EP 2813544 A1
                                         TW 201410770 A
                                         KR 10-2014-0132337 A
                                         CN 104379662 A

JP 2012-76288 A      19 April 2012       (Family: none)

JP 2002-370749 A     24 December 2002    (Family: none)

JP 2020-11390 A      23 January 2020     (Family: none)
```

Form PCT/ISA/210 (patent family annex) (January 2015)

**EP 4 101 639 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017178357 A